# EUROPEAN PATENT APPLICATION

(11) **EP 4 832 626 A1**
(43) Date of publication of application: **28.10.2026**
(21) Application number: 23961867.1
(22) Date of filing: 20.12.2023
(51) Int. Cl.: H04W 72/1273, H04W 72/23

(54) **INFORMATION DETERMINATION METHOD, AND APPARATUS AND STORAGE MEDIUM**

(71) Applicant: Beijing Xiaomi Mobile Software Co., Ltd., Beijing 100085 (CN)
(72) Inventor: LIU, Zhengxuan, Beijing 100085 (CN)
(74) Representative: Dehns Germany Partnerschaft mbB
(86) International application number: PCT/CN2023/140440
(87) International publication number: WO 2025/129528

(57) **Abstract**

The present disclosure relates to an information determination method, and an apparatus and a storage medium. The method is executed by a terminal, and comprises: receiving first configuration information sent by a network device, wherein the first configuration information is used for indicating a first coefficient and second coefficient corresponding to a plurality of CSI-RS resources; and determining the number of CSI-RS ports on the basis of the first coefficient and the second coefficient. Thus, a terminal can determine the number of CSI-RS ports on the basis of a first coefficient and a second coefficient of a plurality of CSI-RS resources configured by a network device, and can realize the configuration of a larger number of CSI-RS ports, so as to support channel measurements with the larger number of CSI-RS ports, thereby improving the performance of a communication system.

## Description

### TECHNICAL FIELD

The present disclosure relates to the field of wireless communication technology, and specifically to a method and an apparatus for determining information, a device and a storage medium.

### BACKGROUND

In the related art, a terminal determines the number of channel state information-reference signal (CSI-RS) ports based on a first coefficient and a second coefficient corresponding to one CSI-RS resource configured by a network device.

### SUMMARY

The embodiments of the present disclosure provide a method and an apparatus for determining information, and a storage medium, so as to solve a problem in the related art that the terminal is not supported to determine the number of channel state information-reference signal (CSI-RS) ports based on first coefficients and second coefficients of a plurality of CSI-RS resources configured by the network device.

The embodiments of the present disclosure provide a method and an apparatus for determining information, and a storage medium.

According to a first aspect of the embodiments of the present disclosure, a method for determining information is provided, performed by a terminal, including: receiving first configuration information sent by a network device, in which the first configuration information indicates first coefficients and second coefficients corresponding to a plurality of CSI-RS resources; and determining the number of CSI-RS ports based on the first coefficients and the second coefficients.

In the above embodiments, the terminal may determine the number of CSI-RS ports based on the first coefficients and the second coefficients of the plurality of CSI-RS resources configured by the network device, which may enable a configuration of a larger number of CSI-RS ports, so as to support channel measurement with the larger number of CSI-RS ports and improve performance.

According to a second aspect of the embodiments of the present disclosure, a method for determining information is provided, performed by a network device, including: sending first configuration information to a terminal, in which the first configuration information indicates a first coefficient and a second coefficient corresponding to each of multiple CSI-RS resources; and the first coefficient and the second coefficient are used by the terminal to determine the number of CSI-RS ports.

In the above embodiments, the network device supports configuring the first coefficients and the second coefficients of the plurality of CSI-RS resources for the terminal to determine the number of CSI-RS ports, which may enable a configuration of a larger number of CSI-RS ports, so as to support channel measurement with the larger number of CSI-RS ports and improve performance of a communication system.

According to a third aspect of the embodiments of the present disclosure, a method for determining information is provided. A network device sends first configuration information to a terminal, in which the first configuration information indicates first coefficients and second coefficients corresponding to a plurality of CSI-RS resources; and the terminal receives the first configuration information sent by the network device; and determines a number of CSI-RS ports based on the first coefficients and the second coefficients.

According to a fourth aspect of the embodiments of the present disclosure, a terminal is provided, including: a transceiver module, configured to receive first configuration information sent by a network device, in which the first configuration information indicates first coefficients and second coefficients corresponding to a plurality of CSI-RS resources; and a processing module, configured to determine a number of CSI-RS ports based on the first coefficients and the second coefficients.

According to a fifth aspect of the embodiments of the present disclosure, a network device is provided, including: a transceiver module, configured to send first configuration information to a terminal, in which the first configuration information indicates first coefficients and second coefficients corresponding to a plurality of CSI-RS resources; and the first coefficients and the second coefficients are used by the terminal to determine a number of CSI-RS ports.

According to a sixth aspect of the embodiments of the present disclosure, a communication device is provided, including: one or more processors; and a memory coupled to the processor, for storing instructions that, when executed by the processor, cause the communication device to perform the method according to the first aspect.

According to a seventh aspect of the embodiments of the present disclosure, a communication device is provided, including: one or more processors; and a memory coupled to the processor, for storing instructions that, when executed by the processor, cause the communication device to perform the method according to the second aspect.

According to an eighth aspect of the embodiments of the present disclosure, a communication system is provided, including a terminal and a network device, in which the terminal is configured to implement the method according to the first aspect, and the network device is configured to implement the method according to the second aspect.

According to a ninth aspect of the embodiments of the present disclosure, a storage medium for storing instructions is provided. When the instructions are executed on a communication device, the communication device is caused to perform the method according to the first aspect or the second aspect.

### BRIEF DESCRIPTION OF THE DRAWINGS

In order to more clearly illustrate the technical solution in the embodiments of the disclosure, the accompanying drawings to be used in the embodiments of the disclosure will be described below. The following drawings are only part embodiments of the present disclosure, and do not constitute a limitation on the protection scope of the present disclosure.
FIG. 1 is a schematic diagram of an architecture of a communication system according to the embodiments of the present disclosure.
FIG. 2 is a flowchart of a method for determining information according to the embodiments of the present disclosure.
FIG. 3A is a flowchart of another method for determining information according to the embodiments of the present disclosure.
FIG. 3B is a flowchart of another method for determining information according to the embodiments of the present disclosure.
FIG. 3C is a flowchart of another method for determining information according to the embodiments of the present disclosure.
FIG. 4A is a flowchart of another method for determining information according to the embodiments of the present disclosure.
FIG. 4B is a flowchart of another method for determining information according to the embodiments of the present disclosure.
FIG. 4C is a flowchart of another method for determining information according to the embodiments of the present disclosure.
FIG. 5A is a block diagram of a terminal according to the embodiments of the present disclosure.
FIG. 5B is a block diagram of a network device according to the embodiments of the present disclosure.
FIG. 6A is a block diagram of a communication device according to the embodiments of the present disclosure.
FIG. 6B is a block diagram of a chip according to the embodiments of the present disclosure.

### DETAILED DESCRIPTION

The embodiments of the present disclosure provide a method and an apparatus for determining information, and a storage medium.

According to a first aspect, the embodiments of the present disclosure provide a method for determining information, performed by a terminal, including: receiving first configuration information sent by a network device, in which the first configuration information indicates first coefficients and second coefficients corresponding to a plurality of channel state information-reference signal (CSI-RS) resources; and determining a number of CSI-RS ports based on the first coefficients and the second coefficients.

In the above embodiments, the terminal may determine the number of CSI-RS ports based on the first coefficients and the second coefficients of the plurality of CSI-RS resources configured by the network device, which may enable a configuration of a larger number of CSI-RS ports, so as to support channel measurement with the larger number of CSI-RS ports and improve performance of a communication system.

In some embodiments in combination with the first aspect, in some embodiments, determining, by the terminal, the number of CSI-RS ports based on the first coefficients and the second coefficients includes: determining a first parameter and a second parameter based on the first coefficients and the second coefficients; and determining the number of CSI-RS ports as twice a product of the first parameter and the second parameter.

In the above embodiments, the terminal may determine the first parameter and the second parameter based on the first coefficients and the second coefficients of the plurality of CSI-RS resources configured by the network device, and then determine the number of CSI-RS ports based on the first parameter and the second parameter, which may enable a configuration of a larger number of CSI-RS ports, so as to support channel measurement with the larger number of CSI-RS ports and improve performance of a communication system.

In some embodiments in combination with the first aspect, in some embodiments, determining, by the terminal, the first parameter and the second parameter based on the first coefficients and the second coefficients includes: in a case that the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, and a first coefficient corresponding to a CSI-RS resource in a first resource group of the two resource groups is equal to a first coefficient corresponding to a CSI-RS resource in a second resource group of the two resource groups, determining the first parameter to be equal to the first coefficient, and determining the second parameter as a sum of: (i) a sum of respective second coefficients corresponding to all CSI-RS resources in the first resource group, plus (ii) a sum of respective second coefficients corresponding to all CSI-RS resources in the second resource group.

In the above embodiments, the terminal may determine the first parameter and the second parameter based on the first coefficients and the second coefficients, and then determine the number of CSI-RS ports based on the first parameter and the second parameter, which may enable a configuration of a larger number of CSI-RS ports, so as to support channel measurement with the larger number of CSI-RS ports and improve performance of a communication system.

In some embodiments in combination with the first aspect, in some embodiments, determining, by the terminal, the first parameter and the second parameter based on the first coefficients and the second coefficients includes: in a case that the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, and a second coefficient corresponding to a CSI-RS resource in a first resource group of the two resource groups is equal to a second coefficient corresponding to a CSI-RS resource in a second resource group of the two resource groups, determining the first parameter as a sum of: (i) a sum of respective first coefficients corresponding to all CSI-RS resources in the first resource group, plus (ii) a sum of respective first coefficients corresponding to all CSI-RS resources in the second resource group, and determining the second parameter to be equal to the second coefficient.

In the above embodiments, the terminal may determine the first parameter and the second parameter based on the first coefficients and the second coefficients, and then determine the number of CSI-RS ports based on the first parameter and the second parameter, which may enable a configuration of a larger number of CSI-RS ports, so as to support channel measurement with the larger number of CSI-RS ports and improve performance of a communication system.

In some embodiments in combination with the first aspect, in some embodiments, determining, by the terminal, the first parameter and the second parameter based on the one or more first coefficients and the second coefficients includes: in a case that the plurality of CSI-RS resources are divided into two resource groups, different CSI-RS resources in a same resource group correspond to a same first coefficient and a same second coefficient, a products of a first coefficient and a second coefficient corresponding to a CSI-RS resource in one resource group is not equal to that in the other resource group, a first coefficient corresponding to a CSI-RS resource in a first resource group of the two resource groups is greater than a first coefficient corresponding to a CSI-RS resource in a second resource group of the two resource groups, and the first coefficient corresponding to the CSI-RS resource in the first resource group is equal to a sum of respective first coefficients corresponding to all CSI-RS resources in the second resource group, determining the first parameter to be the first coefficient corresponding to the CSI-RS resource in the first resource group, and determining the second parameter as a sum of: (i) a sum of respective second coefficients corresponding to all CSI-RS resources in the first resource group, plus (ii) a second coefficient corresponding to the CSI-RS resource in the second resource group.

In the above embodiments, the terminal may determine the first parameter and the second parameter based on the first coefficients and the second coefficients, and then determine the number of CSI-RS ports based on the first parameter and the second parameter, which may enable a configuration of a larger number of CSI-RS ports, so as to support channel measurement with the larger number of CSI-RS ports and improve performance of a communication system.

In some embodiments in combination with the first aspect, in some embodiments, determining, by the terminal, the first parameter and the second parameter based on the first coefficients and the second coefficients includes: in a case that the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, a first coefficient corresponding to a CSI-RS resource in a first resource group of the two resource groups is less than a first coefficient corresponding to a CSI-RS resource in a second resource group of the two resource groups, and a sum of respective second coefficients corresponding to all CSI-RS resources in the first resource group is equal to a second coefficient corresponding to the CSI-RS resource in the second resource group, determining the first parameter as a sum of: (i) a sum of respective first coefficients corresponding to all CSI-RS resources in the second resource group, plus (ii) the first coefficient corresponding to the CSI-RS resource in the first resource group, and determining the second parameter to be the second coefficient corresponding to the CSI-RS resource in the second resource group.

In the above embodiments, the terminal may determine the first parameter and the second parameter based on the first coefficients and the second coefficients, and then determine the number of CSI-RS ports based on the first parameter and the second parameter, which may enable a configuration of a larger number of CSI-RS ports, so as to support channel measurement with the larger number of CSI-RS ports and improve performance of a communication system.

In some embodiments in combination with the first aspect, in some embodiments, determining, by the terminal, the first parameter and the second parameter based on the first coefficients and the second coefficients includes: in a case that the plurality of CSI-RS resources are divided into a plurality of resource groups, different CSI-RS resources in a same resource group correspond to a same first coefficient and a same second coefficient, a product of a first coefficient and a second coefficient corresponding to a CSI-RS resource in one resource groups is not equal to that in any other resource group, a first coefficient corresponding to a CSI-RS resource in a first resource group among the plurality of resource groups is greater than a first coefficient corresponding to a CSI-RS resource in each of other resource groups, and the first coefficient corresponding to the CSI-RS resource in the first resource group is equal to a sum of respective first coefficients corresponding to all CSI-RS resources in any one of other resource groups, determining the first parameter to be the first coefficient corresponding to the CSI-RS resource in the first resource group, and determining the second parameter as a sum of: (i) a sum of respective second coefficients corresponding to all CSI-RS resources in the first resource group, plus (ii) a sum of second coefficients each corresponding to a CSI-RS resource in each of other resource groups.

In the above embodiments, the terminal may determine the first parameter and the second parameter based on the first coefficients and the second coefficients, and then determine the number of CSI-RS ports based on the first parameter and the second parameter, which may enable a configuration of a larger number of CSI-RS ports, so as to support channel measurement with the larger number of CSI-RS ports and improve performance of a communication system.

In some embodiments in combination with the first aspect, in some embodiments, determining, by the terminal, the first parameter and the second parameter based on the first coefficients and the second coefficients includes: in a case that the plurality of CSI-RS resources are divided into a plurality of resource groups, different CSI-RS resources in a same resource group correspond to a same first coefficient and a same second coefficient, a product of a first coefficient and a second coefficient corresponding to a CSI-RS resource in one resource groups is not equal to that in any other resource group, a second coefficient corresponding to a CSI-RS resource in a first resource group among the plurality of resource groups is greater than a second coefficient corresponding to a CSI-RS resource in each of other resource groups, and the second coefficient corresponding to the CSI-RS resource in the first resource group is equal to a sum of respective second coefficients corresponding to all CSI-RS resources in any one of other resource groups, determining the first parameter as a sum of: (i) a sum of respective first coefficients corresponding to all CSI-RS resources in the first resource group, plus (ii) a sum of first coefficients each corresponding to a CSI-RS resource in each of other resource groups, and determining the second parameter to be the second coefficient corresponding to the CSI-RS resource in the first resource group.

In the above embodiments, the terminal may determine the first parameter and the second parameter based on the first coefficients and the second coefficients, and then determine the number of CSI-RS ports based on the first parameter and the second parameter, which may enable a configuration of a larger number of CSI-RS ports, so as to support channel measurement with the larger number of CSI-RS ports and improve performance of a communication system.

In some embodiments in combination with the first aspect, in some embodiments, the above method further includes: receiving, by the terminal, second configuration information sent by the network device, in which the second configuration information indicates a plurality of sets of CSI-RS resources, the plurality of sets of CSI-RS resources include the plurality of CSI-RS resources, and CSI-RS resources belonging to a same set of CSI-RS resources belong to a same resource group.

In the above embodiments, the terminal supports determining the number of CSI-RS ports based on the first coefficients and the second coefficients of the plurality of CSI-RS resources in the plurality of sets of CSI-RS resources configured by the network device, which may enable a configuration of a larger number of CSI-RS ports, so as to support channel measurement with the larger number of CSI-RS ports and improve performance of a communication system.

In some embodiments in combination with the first aspect, in some embodiments, determining, by the terminal, the first parameter and the second parameter based on the first coefficients and the second coefficients includes: in a case that the second coefficients corresponding to the plurality of CSI-RS resources are all 1, determining the first parameter to be a sum of first coefficients corresponding to the plurality of CSI-RS resources, and determining the second parameter to be the second coefficient.

In the above embodiments, the terminal may determine the first parameter and the second parameter based on the first coefficients and the second coefficients, and then determine the number of CSI-RS ports based on the first parameter and the second parameter, which may enable a configuration of a larger number of CSI-RS ports, so as to support channel measurement with the larger number of CSI-RS ports and improve performance of a communication system.

In some embodiments in combination with the first aspect, in some embodiments, determining, by the terminal, the first parameter and the second parameter based on the first coefficients and the second coefficients includes: in a case that the plurality of CSI-RS resources correspond to a same first coefficient and a same second coefficient, determining a first exponent and a second exponent, in which a product of the first exponent and the second exponent is equal to a total number of the plurality of CSI-RS resources; determining the first parameter to be a product of the first coefficient and the first exponent; and determining the second parameter to be a product of the second coefficient and the second exponent.

In the above embodiments, the terminal may determine the first parameter and the second parameter based on the first coefficients and the second coefficients, and then determine the number of CSI-RS ports based on the first parameter and the second parameter, which may enable a configuration of a larger number of CSI-RS ports, so as to support channel measurement with the larger number of CSI-RS ports and improve performance of a communication system.

In some embodiments in combination with the first aspect, in some embodiments, determining, by the terminal, the first exponent and the second exponent includes: receiving indication information sent by the network device, in which the indication information indicates the first exponent and the second exponent; and determining, based on the indication information, the first exponent and the second exponent.

In the above embodiments, the terminal may determine the first exponent and the second exponent based on the indication information sent by the network device.

In some embodiments in combination with the first aspect, in some embodiments, determining, by the terminal, the first parameter and the second parameter based on the first coefficients and the second coefficients includes: in a case that the plurality of CSI-RS resources are divided into two resource groups, different CSI-RS resources in a same resource group correspond to a same first coefficient and a same second coefficient, and a first coefficient corresponding to any CSI-RS resource in a first resource group of the two resource groups is not equal to a first coefficient corresponding to any CSI-RS resource in a second resource group of the two resource groups and/or a second coefficient corresponding to any CSI-RS resource in the first resource group is not equal to a second coefficient corresponding to any CSI-RS resource in the second resource group, determining the first parameter and the second parameter based on the first coefficient and the second coefficient corresponding to the CSI-RS resources in the first resource group, and the first coefficient and the second coefficient corresponding to the CSI-RS resources in the second resource group.

In the above embodiments, the terminal may determine the first parameter and the second parameter based on the first coefficients and the second coefficients, and then determine the number of CSI-RS ports based on the first parameter and the second parameter, which may enable a configuration of a larger number of CSI-RS ports, so as to support channel measurement with the larger number of CSI-RS ports and improve performance of a communication system.

In some embodiments in combination with the first aspect, in some embodiments, determining, by the terminal, the first parameter and the second parameter based on the first coefficient and the second coefficient corresponding to the CSI-RS resources in the first resource group, and the first coefficient and the second coefficient corresponding to the CSI-RS resources in the second resource group includes: in a case that a sum of respective second coefficients corresponding to all CSI-RS resources in the first resource group is equal to the second coefficient corresponding to any CSI-RS resource in the second resource group, determining the first parameter as a sum of: (i) a sum of respective first coefficients corresponding to all CSI-RS resources in the second resource group, plus (ii) the first coefficient corresponding to any CSI-RS resource in the first resource group, and determining the second parameter to be equal to the second coefficient corresponding to any CSI-RS resource in the second resource group; or in a case that a sum of respective first coefficients corresponding to all CSI-RS resources in the second resource group is equal to the first coefficient corresponding to any CSI-RS resource in the first resource group, determining the first parameter to be equal to the first coefficient corresponding to any CSI-RS resource in the first resource group, and determining the second parameter as a sum of: (i) a sum of respective second coefficients corresponding to all CSI-RS resources in the first resource group, plus (ii) the second coefficient corresponding to any CSI-RS resource in the second resource group; or determining the first parameter as a sum of: (i) a sum of respective first coefficients corresponding to all CSI-RS resources in the second resource group, plus (ii) the first coefficient corresponding to any CSI-RS resource in the first resource group, and determining the second parameter as a sum of: (i) a sum of respective second coefficients corresponding to all CSI-RS resources in the first resource group, plus (ii) the second coefficient corresponding to any CSI-RS resource in the second resource group.

In the above embodiments, the terminal may determine the first parameter and the second parameter based on the first coefficients and the second coefficients, and then determine the number of CSI-RS ports based on the first parameter and the second parameter, which may enable a configuration of a larger number of CSI-RS ports, so as to support channel measurement with the larger number of CSI-RS ports and improve performance of a communication system.

In some embodiments in combination with the first aspect, in some embodiments, the above method further includes: receiving, by the terminal, third configuration information sent by the network device, in which the third configuration information indicates a set of CSI-RS resources, and the set of CSI-RS resources includes the plurality of CSI-RS resources.

In the above embodiments, the terminal supports determining the number of CSI-RS ports based on the first coefficients and the second coefficients of the plurality of CSI-RS resources in the set of CSI-RS resources configured by the network device, which may enable a configuration of a larger number of CSI-RS ports, so as to support channel measurement with the larger number of CSI-RS ports and improve performance of a communication system.

According to a second aspect, the embodiments of the present disclosure provide a method for determining information, performed by a network device, including: sending first configuration information to a terminal, in which the first configuration information indicates first coefficients and second coefficients corresponding to a plurality of CSI-RS resources; and the first coefficients and the second coefficients are used by the terminal to determine a number of CSI-RS ports.

In the above embodiments, the network device supports configuring the first coefficients and the second coefficients of the plurality of CSI-RS resources for the terminal to determine the number of CSI-RS ports, which may enable a configuration of a larger number of CSI-RS ports, so as to support channel measurement with the larger number of CSI-RS ports and improve performance of a communication system.

In some embodiments in combination with the second aspect, in some embodiments, the first coefficients and the second coefficients are used by the terminal to determine a first parameter and a second parameter; and the first parameter and the second parameter are used by the terminal to determine the number of CSI-RS ports as twice a product of the first parameter and the second parameter.

In the embodiments, the first coefficients and the second coefficients of the plurality of CSI-RS resources configured by the network device for the terminal are used by the terminal to determine the first parameter and the second parameter, and the first parameter and the second parameter are used by the terminal to determine the number of CSI-RS ports, which may enable a configuration of a larger number of CSI-RS ports, so as to support channel measurement with the larger number of CSI-RS ports and improve performance of a communication system.

In some embodiments in combination with the second aspect, in some embodiments, in a case that the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, and a first coefficient corresponding to a CSI-RS resource in a first resource group of the two resource groups is equal to a first coefficient corresponding to a CSI-RS resource in a second resource group of the two resource groups, the first coefficient and the second coefficient are used by the terminal to determine the first parameter to be equal to the first coefficient, and the second parameter is a sum of: (i) a sum of respective second coefficients corresponding to all CSI-RS resources in the first resource group, plus (ii) a sum of respective second coefficients corresponding to all CSI-RS resources in the second resource group.

In some embodiments in combination with the second aspect, in some embodiments, in a case that the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, and a second coefficient corresponding to a CSI-RS resource in a first resource group of the two resource groups is equal to a second coefficient corresponding to a CSI-RS resource in a second resource group of the two resource groups, the first coefficient and the second coefficient are used by the terminal to determine the first parameter as a sum of: (i) a sum of respective first coefficients corresponding to all CSI-RS resources in the first resource group, plus (ii) a sum of respective first coefficients corresponding to all CSI-RS resources in the second resource group, and determine the second parameter to be equal to the second coefficient.

In some embodiments in combination with the second aspect, in some embodiments, in a case that the plurality of CSI-RS resources are divided into two resource groups, different CSI-RS resources in a same resource group correspond to a same first coefficient and a same second coefficient, a products of a first coefficient and a second coefficient corresponding to a CSI-RS resource in one resource group is not equal to that in the other resource group, a first coefficient corresponding to a CSI-RS resource in a first resource group of the two resource groups is greater than a first coefficient corresponding to a CSI-RS resource in a second resource group of the two resource groups, and the first coefficient corresponding to the CSI-RS resource in the first resource group is equal to a sum of respective first coefficients corresponding to all CSI-RS resources in the second resource group, the first coefficient and the second coefficient are used by the terminal to determine the first parameter to be the first coefficient corresponding to the CSI-RS resource in the first resource group, and determine the second parameter as a sum of: (i) a sum of respective second coefficients corresponding to all CSI-RS resources in the first resource group, plus (ii) a second coefficient corresponding to the CSI-RS resource in the second resource group.

In some embodiments in combination with the second aspect, in some embodiments, in a case that the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, a first coefficient corresponding to a CSI-RS resource in a first resource group of the two resource groups is less than a first coefficient corresponding to a CSI-RS resource in a second resource group of the two resource groups, and a sum of respective second coefficients corresponding to all CSI-RS resources in the first resource group is equal to a second coefficient corresponding to the CSI-RS resource in the second resource group, the first coefficient and the second coefficient are used by the terminal to determine the first parameter as a sum of: (i) a sum of respective first coefficients corresponding to all CSI-RS resources in the second resource group, plus (ii) the first coefficient corresponding to the CSI-RS resource in the first resource group, and determine the second parameter to be the second coefficient corresponding to the CSI-RS resource in the second resource group.

In some embodiments in combination with the second aspect, in some embodiments, in a case that the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, a first coefficient corresponding to a CSI-RS resource in a first resource group among the plurality of resource groups is greater than a first coefficient corresponding to a CSI-RS resource in each of other resource groups, and the first coefficient corresponding to the CSI-RS resource in the first resource group is equal to a sum of respective first coefficients corresponding to all CSI-RS resources in any one of other resource groups, the first coefficient and the second coefficient are used by the terminal to determine the first parameter to be the first coefficient corresponding to the CSI-RS resource in the first resource group, and determine the second parameter as a sum of: (i) a sum of respective second coefficients corresponding to all CSI-RS resources in the first resource group, plus (ii) a sum of second coefficients each corresponding to a CSI-RS resource in each of other resource groups.

In some embodiments in combination with the second aspect, in some embodiments, in a case that the plurality of CSI-RS resources are divided into a plurality of resource groups, different CSI-RS resources in a same resource group correspond to a same first coefficient and a same second coefficient, a product of a first coefficient and a second coefficient corresponding to a CSI-RS resource in one resource groups is not equal to that in any other resource group, a second coefficient corresponding to a CSI-RS resource in a first resource group among the plurality of resource groups is greater than a second coefficient corresponding to a CSI-RS resource in each of other resource groups, and the second coefficient corresponding to the CSI-RS resource in the first resource group is equal to a sum of respective second coefficients corresponding to all CSI-RS resources in any one of other resource groups, the first coefficient and the second coefficient are used by the terminal to determine the first parameter as a sum of: (i) a sum of respective first coefficients corresponding to all CSI-RS resources in the first resource group, plus (ii) a sum of first coefficients each corresponding to a CSI-RS resource in each of other resource groups, and determine the second parameter to be the second coefficient corresponding to the CSI-RS resource in the first resource group.

In some embodiments in combination with the second aspect, in some embodiments, the above method further includes: sending second configuration information to the terminal, in which the second configuration information indicates a plurality of sets of CSI-RS resources, the plurality of sets of CSI-RS resources include the plurality of CSI-RS resources, and CSI-RS resources belonging to a same set of CSI-RS resources belong to a same resource group.

In some embodiments in combination with the second aspect, in some embodiments, in a case that the second coefficients corresponding to the plurality of CSI-RS resources are all 1, the first coefficient and the second coefficient are used by the terminal to determine that the first parameter is a sum of first coefficients corresponding to the plurality of CSI-RS resources, and the second parameter is the second coefficient.

In some embodiments in combination with the second aspect, in some embodiments, in a case that the plurality of CSI-RS resources correspond to a same first coefficient and a same second coefficient, the first coefficient and the second coefficient are used by the terminal to determine a first exponent and a second exponent, in which a product of the first exponent and the second exponent is equal to a total number of the plurality of CSI-RS resources; determine the first parameter to be a product of the first coefficient and the first exponent; and determine the second parameter to be a product of the second coefficient and the second exponent.

In some embodiments in combination with the second aspect, in some embodiments, the above method further includes: sending indication information to the terminal, in which the indication information indicates the first exponent and the second exponent.

In some embodiments in combination with the second aspect, in some embodiments, in a case that the plurality of CSI-RS resources are divided into two resource groups, different CSI-RS resources in a same resource group correspond to a same first coefficient and a same second coefficient, and a first coefficient corresponding to any CSI-RS resource in a first resource group of the two resource groups is not equal to a first coefficient corresponding to any CSI-RS resource in a second resource group of the two resource groups and/or a second coefficient corresponding to any CSI-RS resource in the first resource group is not equal to a second coefficient corresponding to any CSI-RS resource in the second resource group, the first coefficient and the second coefficient corresponding to the CSI-RS resources in the first resource group, and the first coefficient and the second coefficient corresponding to the CSI-RS resources in the second resource group are used by the terminal to determine the first parameter and the second parameter.

In some embodiments in combination with the second aspect, in some embodiments, in a case that a sum of respective second coefficients corresponding to all CSI-RS resources in the first resource group is equal to the second coefficient corresponding to any CSI-RS resource in the second resource group, the first coefficient and the second coefficient corresponding to the CSI-RS resources in the first resource group, and the first coefficient and the second coefficient corresponding to the CSI-RS resources in the second resource group are used by the terminal to determine the first parameter as a sum of: (i) a sum of respective first coefficients corresponding to all CSI-RS resources in the second resource group, plus (ii) the first coefficient corresponding to any CSI-RS resource in the first resource group, and determine the second parameter to be equal to the second coefficient corresponding to any CSI-RS resource in the second resource group; or in a case that a sum of respective first coefficients corresponding to all CSI-RS resources in the second resource group is equal to the first coefficient corresponding to any CSI-RS resource in the first resource group, the first coefficient and the second coefficient corresponding to the CSI-RS resources in the first resource group, and the first coefficient and the second coefficient corresponding to the CSI-RS resources in the second resource group are used by the terminal to determine the first parameter to be equal to the first coefficient corresponding to any CSI-RS resource in the first resource group, and determine the second parameter as a sum of: (i) a sum of respective second coefficients corresponding to all CSI-RS resources in the first resource group, plus (ii) the second coefficient corresponding to any CSI-RS resource in the second resource group; or the first coefficient and the second coefficient corresponding to the CSI-RS resources in the first resource group, and the first coefficient and the second coefficient corresponding to the CSI-RS resources in the second resource group are used by the terminal to determine the first parameter as a sum of: (i) a sum of respective first coefficients corresponding to all CSI-RS resources in the second resource group, plus (ii) the first coefficient corresponding to any CSI-RS resource in the first resource group, and determine the second parameter as a sum of: (i) a sum of respective second coefficients corresponding to all CSI-RS resources in the first resource group, plus (ii) the second coefficient corresponding to any CSI-RS resource in the second resource group.

In some embodiments in combination with the second aspect, in some embodiments, the above method further includes: sending, by the network device, third configuration information to the terminal, in which the third configuration information indicates a set of CSI-RS resources, and the set of CSI-RS resources includes the plurality of CSI-RS resources.

According to a third aspect, the embodiments of the present disclosure provide a method for determining information, in which a network device sends first configuration information to a terminal, in which the first configuration information indicates first coefficients and second coefficients corresponding to a plurality of CSI-RS resources; and receives the first configuration information sent by the network device; and determines a number of CSI-RS ports based on the first coefficients and the second coefficients.

According to a fourth aspect, the embodiments of the present disclosure provide a terminal, including at least one of a transceiver module or a processing module, in which the terminal is configured to perform the optional implementations of the first aspect.

According to a fifth aspect, the embodiments of the present disclosure provide a network device, including at least one of a transceiver module or a processing module, in which the network device is configured to perform the optional implementations of the second aspect.

According to a sixth aspect, the embodiments of the present disclosure provide a communication device, including: one or more processors; and a memory coupled to the processor, for storing instructions that, when executed by the processor, cause the communication device to perform the method according to the first aspect.

According to a seventh aspect, the embodiments of the present disclosure provide a communication device, including: one or more processors; and a memory coupled to the processor, for storing instructions that, when executed by the processor, cause the communication device to perform the method according to the second aspect.

According to an eighth aspect, the embodiments of the present disclosure provide a communication system, including: a terminal and a network device, in which the terminal is configured to perform the method described in the optional implementations of the first aspect, and the network device is configured to perform the method described in the optional implementations of the second aspect.

According to a ninth aspect, the embodiments of the present disclosure provide a storage medium for storing instructions that, when executed on a communication device, cause the communication device to perform the method described in the optional implementations of the first aspect and the second aspect.

According to a tenth aspect, the embodiments of the present disclosure provide a program product that, when executed by a communication device, causes the communication device to perform the method described in the optional implementations of the first aspect and the second aspect.

According to an eleventh aspect, the embodiments of the present disclosure provide a computer program that, when running on a computer, causes the computer to perform the method described in the optional implementations of the first aspect and the second aspect.

According to a twelfth aspect, the embodiments of the present disclosure provide a chip or a chip system, including a processing circuit, configured to perform the method described in the optional implementations of the first aspect and the second aspect.

It may be understood that the terminal, the network device, the communication system, the storage medium, the program product, the computer program, the chip, or the chip system are all used to perform the methods in the embodiments of the present disclosure. Therefore, for achievable beneficial effects, reference may be made to the beneficial effects in the corresponding method, which are not repeated here.

The embodiments of the present disclosure provide a method and an apparatus for determining information, and a storage medium. In some embodiments, the terms such as method for determining information, information processing method, communication method, etc. may be used interchangeably.

The embodiments of the present disclosure are not exhaustive and only serve as illustrations of some embodiments, but not as specific limitations on the protection scope of the present disclosure. When there is no contradiction, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined. Furthermore, different embodiments may be arbitrarily combined. For example, some or all steps of different embodiments may be arbitrarily combined, and an embodiment may be arbitrarily combined with optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in the embodiments of the present disclosure are for a purpose of describing specific embodiments only and are not intended to limit the present disclosure.

In the embodiments of the present disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In the embodiments of the present disclosure, "a plurality of" means two or more.

In some embodiments, the terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the present disclosure, depending on situations, may include at least one of following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more parts such as A, B, C, etc.

In some embodiments, expressions such as "A or B", depending on situations, may include following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and device, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., an access network device, a core network device, etc.) included in the network.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc. may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. may be used interchangeably.

In some embodiments, the access network device, the core network device, or the network device may be replaced with the terminal. For example, various embodiments of the disclosure may also be applied to a structure in which communication between the access network device, the core network device, or the network device and the terminal is replaced with communication between a plurality of terminals (for example, device-to-device (D2D), vehicle-to-everything (V2X), etc.). In this case, the terminal may be set to have a structure that has all or part of functions of the access network device. In addition, the language such as "uplink" and "downlink" may also be replaced with the language corresponding to the communication between the terminals (for example, "side"). For example, the uplink channel, the downlink channel, etc. may be replaced with the side channel, and the uplink, the downlink, etc. may be replaced with a sidelink.

In some embodiments, the terminal may be replaced with the access network device, the core network device, or the network device. In this case, the access network device, the core network device, or the network device may also be configured to have a structure that has all or part of functions of the terminal.

In some embodiments, the acquisition of data, information, etc. may comply with laws and regulations of the country to which the data is obtained.

In some embodiments, data, information, etc. may be obtained with consent from users.

In addition, each element, each row, or each column in the table of the embodiments of the disclosure may be implemented as an independent embodiment, and the combination of any elements, any rows, or any columns may also be implemented as an independent embodiment.

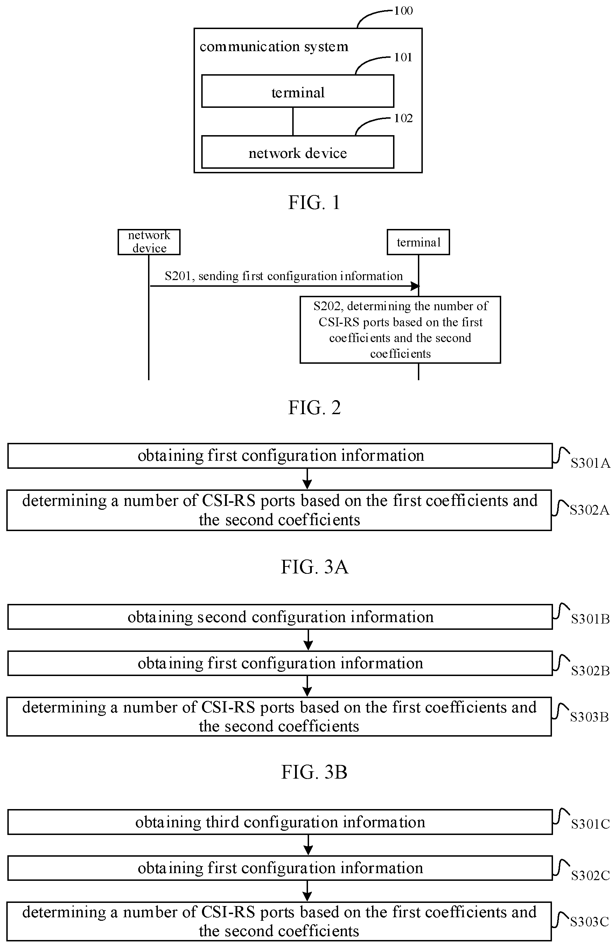

FIG. 1 is a schematic diagram of an architecture of a communication system according to the embodiments of the present disclosure.

As shown in FIG. 1, a communication system 100 includes a terminal 101 and a network device 102.

In some embodiments, the terminal 101 includes, for example, at least one of a mobile phone, a wearable device, an Internet of Things device, or a car, a smart car, and a Pad, with a communication function, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the network device 102 may include at least one of an access network device or a core network device.

In some embodiments, the access network device is, for example, a node or device that connects the terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, or an access node in a wireless fidelity (Wi-Fi) system, which is not limited herein.

In some embodiments, the core network device may be a device, including a first network function, a second network function, etc., or may be a plurality of devices or groups of devices, including all or part of a first network function, a second network function, etc. The network function may be virtual or physical. The core network includes, for example, at least one of an evolved packet core (EPC), a 5G core network (5GCN), or a next generation core (NGC).

In some embodiments, the first network function is, for example, an access and mobility management function (AMF).

In some embodiments, the first network function is used for access control and mobility management for the terminal to access an operator network, for example, including managing a mobility state, allocating a temporary user identity, authenticating and authorizing a user, etc. Its name is not limited herein.

It may be understood that the communication system described in the embodiments of the disclosure aims to more clearly illustrate the technical solutions of the embodiments of the disclosure, and does not constitute a limitation on the technical solutions provided in the embodiments of the disclosure. A person skilled in the art may know that with the evolution of the system architecture and the emergence of new service scenarios, the technical solution provided in the embodiments of the disclosure are also applicable to similar technical problems.

The following embodiments of the present disclosure may be applied to the communication system 100 shown in FIG. 1, or to some entities, but are not limited thereto. Entities in FIG. 1 are illustrative. The communication system may include all or some of the entities in FIG. 1, or may include other entities not shown in FIG. 1. The entities may be in any number and in any form. Each entity may be physical or virtual. Connection relationships between the entities are illustrative. The entities may be unconnected or may be connected. They may be connected in any manner, for example, they may be directly connected or indirectly connected, or may be connected via a wired or wireless way.

The embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them, etc. In addition, a combination of a plurality of systems (e.g., a combination of LTE or LTE-A with 5G) may also be applied.

In the related art, the terminal is only supported to determine the number of CSI-RS ports based on the first coefficient and the second coefficient corresponding to one CSI-RS resource configured by the network device.

Based on this, the embodiments of the present disclosure provide a method and an apparatus for determining information, and a storage medium. The terminal receives first configuration information sent by the network device, in which the first configuration information indicates the first coefficients and the second coefficients corresponding to the plurality of CSI-RS resources; and determines the number of CSI-RS ports based on the first coefficients and the second coefficients. Thus, the terminal may determine the number of CSI-RS ports based on the first coefficients and the second coefficients of the plurality of CSI-RS resources configured by the network device, which may enable a configuration of a larger number of CSI-RS ports, so as to support channel measurement with the larger number of CSI-RS ports and improve performance of a communication system.

FIG. 2 is a flowchart of a method for determining information according to the embodiments of the present disclosure. As shown in FIG. 2, the embodiments of the present disclosure relate to a method for determining information. The above method includes the following steps at S201 to S202.

At S201, a network device sends first configuration information to a terminal, in which the first configuration information indicates first coefficients and second coefficients corresponding to a plurality of CSI-RS resources.

In some embodiments, the network device sends a medium access control control element (MAC CE) to the terminal, in which the MAC CE includes the first configuration information.

In some embodiments, the network device sends downlink control information (DCI) to the terminal, in which the DCI includes the first configuration information.

In some embodiments, the network device sends a radio resource control (RRC) signaling to the terminal, in which the RRC signaling includes the first configuration information.

In the embodiments of the present disclosure, the first configuration information indicates the first coefficients and the second coefficients corresponding to the plurality of CSI-RS resources.

In some embodiments, the first configuration information indicates, for each CSI-RS resource among the plurality of CSI-RS resources, a corresponding first coefficient and a corresponding second coefficient.

In some embodiments, if the plurality of CSI-RS resources correspond to a same first coefficient and a same second coefficient, the first configuration information sent by the network device may indicate the first coefficient and the second coefficient corresponding to some CSI-RS resources, i.e., the some CSI-RS resources may not be indicated by the first configuration information.

In some embodiments, if some CSI-RS resources correspond to a same first coefficient and a same second coefficient, the first configuration information may indicate the first coefficient and the second coefficient corresponding to one of the some CSI-RS resources, and for other CSI-RS resources, the first configuration information may indicate that they correspond to the same first coefficient and the same second coefficient as the CSI-RS resource.

In some embodiments, the first configuration information indicates a first coefficient and a second coefficient corresponding to the some CSI-RS resources, and the terminal defaults, based on the first configuration information, that a first coefficient corresponding to other CSI-RS resources other than the some CSI-RS resources is equal to a first coefficient corresponding to a certain one of the some CSI-RS resources, and that a second coefficient corresponding to the other CSI-RS resources other than the some CSI-RS resources is equal to a second coefficient corresponding to a certain one of the some CSI-RS resources.

In some embodiments, the first configuration information indicates the first coefficient and the second coefficient corresponding to some of the plurality of CSI-RS resources, and indicates that the first coefficient corresponding to other CSI-RS resources other than some of the plurality of CSI-RS resources is equal to the first coefficient corresponding to the certain one of the some CSI-RS resources, and indicates that the second coefficient corresponding to the other CSI-RS resources other than some of the plurality of CSI-RS resources is equal to the second coefficient corresponding to the certain one of the some CSI-RS resources.

In some embodiments, for each CSI-RS resource, the corresponding first coefficient is a number of ports in a horizontal dimension corresponding to the CSI-RS resource, and the corresponding second coefficient is a number of ports in a vertical dimension corresponding to the CSI-RS resource.

In some embodiments, for a CSI-RS resource, the first coefficient is n₁ and the second coefficient is n₂. Values of n₁ and n₂ may be seen in Table 1 below, where O₁ and O₂ respectively represent oversampling factors in a horizontal dimension and vertical dimension.

**Table 1**

| **number of CSI-RS ports,** *P*_{CSI-RS} | (***n*₁, *n*₂**) | (*O*₁, *O*₂) |
|---|---|---|
| 4 | (2,1) | (4,1) |
| 8 | (2,2) | (4,4) |
| | (4,1) | (4,1) |
| 12 | (3,2) | (4,4) |
| | (6,1) | (4,1) |
| 16 | (4,2) | (4,4) |
| | (8,1) | (4,1) |
| 24 | (4,3) | (4,4) |
| | (6,2) | (4,4) |
| | (12,1) | (4,1) |
| 32 | (4,4) | (4,4) |
| | (8,2) | (4,4) |
| | (16,1) | (4,1) |

In some embodiments, the network device sends the first configuration information to the terminal, and the first configuration information indicates a codebook subset restriction (CBSR), in which the CBSR indicates, for each CSI-RS resource among the plurality of CSI-RS resources, the corresponding first coefficient and second coefficient.

In some embodiments, values of n₁ and n₂ are configured to the terminal by the network device via an RRC signaling.

In some embodiments, the configuration of the first coefficient n₁ and the second coefficient n₂ corresponding to Release 15 Type I (Rel-15 Type I codebook) is as follows.

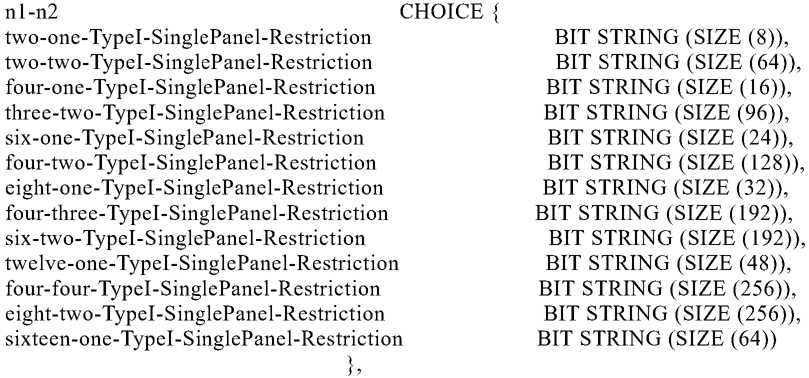

In some embodiments, the configuration of the first coefficient n₁ and the second coefficient n₂ corresponding to Release 16 Type II (Rel-16 Type II codebook) is as follows.

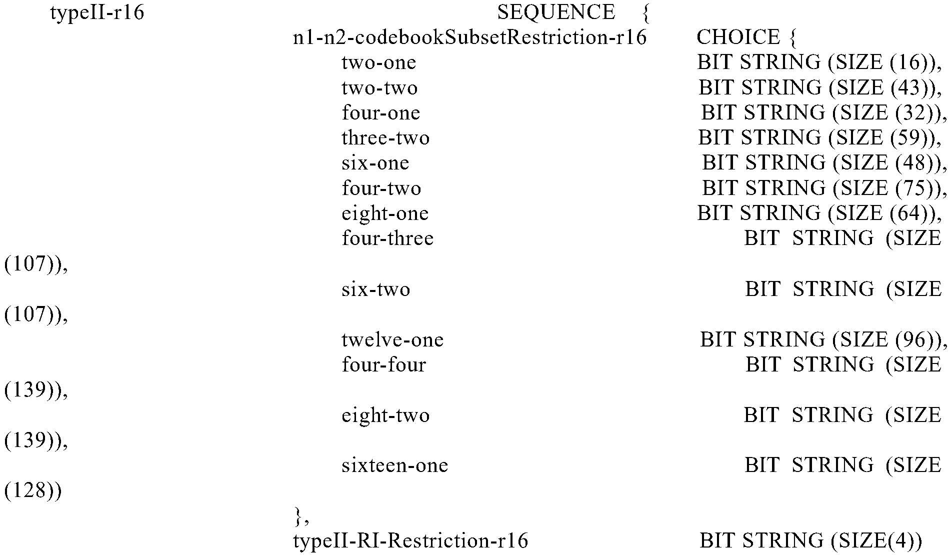

In the related art, the number of CSI-RS ports included in a CSI-RS resource is twice the product of the first coefficient and the second coefficient corresponding to the CSI-RS resource configured by the network device. The number of CSI-RS ports in the CSI-RS resource configured by the network device is limited to 1, 2, 4, 8, 12, 16, 24, and 32.

In the embodiments of the present disclosure, the network device sends the first configuration information to the terminal, in which the first configuration information indicates the first coefficients and the second coefficients corresponding to the plurality of CSI-RS resources.

In the embodiments of the present disclosure, the network device is supported to configure, for the terminal, the first coefficient and the second coefficient corresponding to each CSI-RS resource among the plurality of CSI-RS resources, and determine the number of CSI-RS ports based on the first coefficient and the second coefficient corresponding to the CSI-RS resource among the plurality of CSI-RS resources.

In some embodiments, the network device sends second configuration information to the terminal, in which the second configuration information indicates a plurality of sets of CSI-RS resources, the plurality of sets of CSI-RS resources include the plurality of CSI-RS resources, and CSI-RS resources belonging to a same set of CSI-RS resources belong to a same resource group.

In the embodiments of the present disclosure, the network device may send the second configuration information to the terminal, the second configuration information indicates the plurality of sets of CSI-RS resources, the plurality of sets of CSI-RS resources include the plurality of CSI-RS resources, and CSI-RS resources belonging to the same set of CSI-RS resources belong to the same resource group. In this case, the network device sends the first configuration information to the terminal, and the first configuration information indicates the first coefficients and the second coefficients corresponding to the plurality of CSI-RS resources.

In some embodiments, the network device sends third configuration information to the terminal, in which the third configuration information indicates a set of CSI-RS resources, and the set of CSI-RS resources includes the plurality of CSI-RS resources.

In the embodiments of the present disclosure, the network device may send the third configuration information to the terminal, the third configuration information indicates the set of CSI-RS resources, and the set of CSI-RS resources includes the plurality of CSI-RS resources. In this case, the network device sends the first configuration information to the terminal, and the first configuration information indicates the first coefficients and the second coefficients corresponding to the plurality of CSI-RS resources.

At S202, the terminal determines the number of CSI-RS ports based on the first coefficients and the second coefficients.

In the embodiments of the present disclosure, the terminal receives the first configuration information sent by the network device, the first configuration information indicates the first coefficients and the second coefficients corresponding to the plurality of CSI-RS resource. Thus, the terminal may determine the number of CSI-RS ports based on the first coefficients and the second coefficients corresponding to the plurality of CSI-RS resources.

It may be understood that the number of CSI-RS ports included in a CSI-RS resource is twice the product of the first coefficient and the second coefficient corresponding to the CSI-RS resource configured by the network device. The number of CSI-RS ports in the CSI-RS resource configured by the network device is limited to 1, 2, 4, 8, 12, 16, 24, and 32. In the embodiments of the present disclosure, the network device configures, for the terminal, a first coefficient and a second coefficient corresponding to each CSI-RS resource in the plurality of CSI-RS resources, and the terminal may determine the number of CSI-RS ports based on the first coefficient and the second coefficient corresponding to the each CSI-RS resource in the plurality of CSI-RS resources, in which the number of CSI-RS ports may be greater than 32. Thus, a configuration of a larger number of CSI-RS ports may be achieved, so as to support channel measurement with the larger number of CSI-RS ports and improve performance of a communication system.

In some embodiments, the first coefficient is 2 and the second coefficient is 1; or the first coefficient is 2 and the second coefficient is 2; or the first coefficient is 4 and the second coefficient is 1; or the first coefficient is 3 and the second coefficient is 2; or the first coefficient is 6 and the second coefficient is 1; or the first coefficient is 4 and the second coefficient is 2; or the first coefficient is 8 and the second coefficient is 1; or the first coefficient is 4 and the second coefficient is 3; or the first coefficient is 6 and the second coefficient is 2; or the first coefficient is 12 and the second coefficient is 1; or the first coefficient is 4 and the second coefficient is 4; or the first coefficient is 8 and the second coefficient is 2; or the first coefficient is 16 and the second coefficient is 1.

In some embodiments, the number of CSI-RS ports is 48; or the number of CSI-RS ports is 64; or the number of CSI-RS ports is 72; or the number of CSI-RS ports is 96; or the number of CSI-RS ports is 128.

In some embodiments, determining, by the terminal, the number of CSI-RS ports based on the first coefficients and the second coefficients includes: determining a number of CSI-RS sub-ports for each CSI-RS resource based on the first coefficient and the second coefficient corresponding to the each CSI-RS resource in the plurality of CSI-RS resources, and then determining the number of CSI-RS ports based on the number of CSI-RS sub-ports for each CSI-RS resource.

In some embodiments, determining, by the terminal, the number of CSI-RS ports based on the first coefficients and the second coefficients includes: determining a first parameter and a second parameter based on the first coefficients and the second coefficients; and determining the number of CSI-RS ports as twice a product of the first parameter and the second parameter based on the first parameter and the second parameter.

In the embodiments of the present disclosure, in a case that the terminal determines the first coefficient and the second coefficient corresponding to the each CSI-RS resource in the plurality of CSI-RS resources, it may determine the first parameter and the second parameter based on the first coefficient and the second coefficient, and then determine the number of CSI-RS ports as twice the product of the first parameter and the second parameter based on the first parameter and the second parameter.

In some embodiments, the first parameter is a number of ports in a horizontal dimension, and the second parameter is a number of ports in a vertical dimension.

In some embodiments, the first parameter is a number of ports in a horizontal dimension in a polarization direction, and the second parameter is a number of ports in a vertical dimension in a polarization direction.

It may be understood that antenna ports are in dual polarization directions. In a polarization direction, the number of ports in the horizontal dimension is the first parameter, and the number of ports in the vertical dimension is the second parameter. The number of antenna ports in a polarization direction is equal to the number of antenna ports in another polarization direction. Thus, the number of antenna ports may be twice the product of the first parameter and the second parameter.

For example, a configuration of more than 32 CSI-RS ports is determined by the plurality of CSI-RS resources configured by the network device. When the number of CSI-RS ports is greater than 32, such as the number of CSI-RS ports = 48, 64, 72, 96, and 128, corresponding possible combinations of the first parameter N₁ and the second parameter N₂ are shown in Table 2 below.

**Table 2**

| **number of CSI-RS ports,** *P*_{CSI-RS} | (*N*₁, *N*₂) | (*O*₁, *O*₂) |
|---|---|---|
| 48 | (8,3) | (4,4) |
| | (6,4) | (4,4) |
| | (12,2) | (4,4) |
| 64 | (8,4) | (4,4) |
| | (16,2) | (4,4) |
| | (32,1) | (4,1) |
| 72 | (6,6) | (4,4) |
| | (36,1) | (4,1) |
| 96 | (8,6) | (4,4) |
| | (12,4) | (4,4) |
| | (16,3) | (4,4) |
| | (24,2) | (4,4) |
| | (48,1) | (4,1) |
| 128 | (8,8) | (4,4) |
| | (16,4) | (4,4) |
| | (32,2) | (4,4) |
| | (64,1) | (4,1) |

In some embodiments, the first parameter is 8 and the second parameter is 3; or the first parameter is 6 and the second parameter is 4; or the first parameter is 12 and the second parameter is 2; or the first parameter is 8 and the second parameter is 4; or the first parameter is 16 and the second parameter is 2; or the first parameter is 32 and the second parameter is 1; or the first parameter is 6 and the second parameter is 6; or the first parameter is 36 and the second parameter is 1; or the first parameter is 8 and the second parameter is 6; or the first parameter is 12 and the second parameter is 4; or the first parameter is 16 and the second parameter is 3; or the first parameter is 24 and the second parameter is 2; or the first parameter is 48 and the second parameter is 1; or the first parameter is 8 and the second parameter is 8; or the first parameter is 16 and the second parameter is 4; or the first parameter is 32 and the second parameter is 2; or the first parameter is 64 and the second parameter is 1.

In some embodiments, determining, by the terminal, the first parameter and the second parameter based on the first coefficients and the second coefficients includes: in a case that the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, and a first coefficient corresponding to a CSI-RS resource in a first resource group of the two resource groups is equal to a first coefficient corresponding to a CSI-RS resource in a second resource group of the two resource groups, determining the first parameter to be equal to the first coefficient, and determining the second parameter as a sum of: (i) a sum of respective second coefficients corresponding to all CSI-RS resources in the first resource group, plus (ii) a sum of respective second coefficients corresponding to all CSI-RS resources in the second resource group.

In the embodiments of the present disclosure, in a case that the plurality of CSI-RS resources configured by the network device are divided into two resource groups, different CSI-RS resources in the same resource group correspond to the same first coefficient and the same second coefficient, i.e., first coefficients of different CSI-RS resources in the same resource group are the same, and second coefficients of different CSI-RS resources in the same resource group are also the same, and the product of the first coefficient and the second coefficient corresponding to the CSI-RS resource in the one resource group is not equal to that in the other resource group, if the first coefficient corresponding to the CSI-RS resource in the first resource group of the two resource groups is equal to the first coefficient corresponding to the CSI-RS resource in the second resource group of the two resource groups, the terminal may determine the first parameter to be equal to the first coefficient, and determine the second parameter as the sum of: (i) the sum of respective second coefficients corresponding to all CSI-RS resources in the first resource group, plus (ii) the sum of respective second coefficients corresponding to all CSI-RS resources in the second resource group.

For example, the network configures I CSI-RS resources for the terminal, I is an integer greater than 1, and the I CSI-RS resources belong to two resource groups. Each of L resources in a first resource group has a corresponding first coefficient N_{1,i} and a corresponding second coefficient , i ∈ {0. ... . L - 1}, with all the first coefficients being equal, and all the second coefficients being equal. Each of M=I-L resources in a second resource group has a corresponding first coefficient 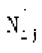 and a corresponding second coefficient 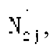 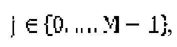 with all the first coefficients being equal, and all the second coefficients being equal. If 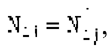 the terminal may determine the first parameter N₁ and the second parameter N₂:

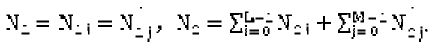

In some embodiments, determining, by the terminal, the first parameter and the second parameter based on the first coefficients and the second coefficients includes: in a case that the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, and a second coefficient corresponding to a CSI-RS resource in a first resource group of the two resource groups is equal to a second coefficient corresponding to a CSI-RS resource in a second resource group of the two resource groups, determining the first parameter as a sum of: (i) a sum of respective first coefficients corresponding to all CSI-RS resources in the first resource group, plus (ii) a sum of respective first coefficients corresponding to all CSI-RS resources in the second resource group, and determining the second parameter to be equal to the second coefficient.

In the embodiments of the present disclosure, in a case that the plurality of CSI-RS resources configured by the network device are divided into two resource groups, different CSI-RS resources in the same resource group correspond to the same first coefficient and the same second coefficient, i.e., first coefficients of different CSI-RS resources in the same resource group are the same, and second coefficients of different CSI-RS resources in the same resource group are also the same, and the product of the first coefficient and the second coefficient corresponding to the CSI-RS resource in the one resource group is not equal to that in the other resource group, if the second coefficient corresponding to the CSI-RS resource in the first resource group of the two resource groups is equal to the second coefficient corresponding to the CSI-RS resource in the second resource group of the two resource groups, the terminal may determine the first parameter as the sum of: (i) the sum of respective first coefficients corresponding to all CSI-RS resources in the first resource group, plus (ii) the sum of respective first coefficients corresponding to all CSI-RS resources in the second resource group, and determine the second parameter to be equal to the second coefficient.

For example, network configures I CSI-RS resources for the terminal, I is an integer greater than 1, and the I CSI-RS resources belong to two resource groups. Each of L resources in a first resource group has a corresponding first coefficient N_{1,i} and a corresponding second coefficient , i ∈ {0..... L - 1}, with all the first coefficients being equal, and all the second coefficients being equal. Each of M=I-L resources in a second resource group has a corresponding first coefficient 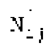 and a corresponding second coefficient 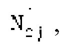 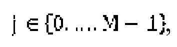 with all the first coefficients being equal, and all the second coefficients being equal. If 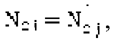 the terminal may determine the first parameter N₁ and the second parameter :

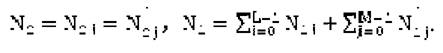

For example, the network device configures two sets of CSI-RS resources for the terminal, each set of CSI-RS resources includes two CSI-RS resources, and the two CSI-RS resources in the each set of CSI-RS resources belong to one resource group. Each of L=2 resources in a first resource group has a corresponding first coefficient N_{1,i} and a corresponding second coefficient , with all the first coefficients being equal, and all the second coefficients being equal, where N_{1,i} = 8 and N_{2,i} = 2, ia??{0,1}. Each of resources in a second resource group has a corresponding first coefficient 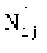 and a corresponding second coefficient 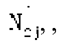 with all the first coefficients being equal, and all the second coefficients being equal, where 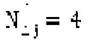 and 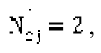 ja??{0,1} . Since 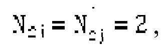 the terminal may determine the first parameter N₁ and the second parameter N₂ : 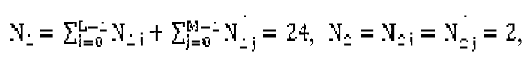 and then the terminal may determine that the number of CSI-RS ports is twice the product of the first parameter and the second parameter, i.e., the number of CSI-RS ports ${P}_{CSI - RS}^{tot} = 2 {N}_{1} {N}_{2} = 96$.

In some embodiments, determining, by the terminal, the first parameter and the second parameter based on the first coefficients and the second coefficients includes: in a case that the plurality of CSI-RS resources are divided into two resource groups, different CSI-RS resources in a same resource group correspond to a same first coefficient and a same second coefficient, a products of a first coefficient and a second coefficient corresponding to a CSI-RS resource in one resource group is not equal to that in the other resource group, a first coefficient corresponding to a CSI-RS resource in a first resource group of the two resource groups is greater than a first coefficient corresponding to a CSI-RS resource in a second resource group of the two resource groups, and the first coefficient corresponding to the CSI-RS resource in the first resource group is equal to a sum of respective first coefficients corresponding to all CSI-RS resources in the second resource group, determining the first parameter to be the first coefficient corresponding to the CSI-RS resource in the first resource group, and determining the second parameter as a sum of: (i) a sum of respective second coefficients corresponding to all CSI-RS resources in the first resource group, plus (ii) a second coefficient corresponding to the CSI-RS resource in the second resource group.

In the embodiments of the present disclosure, in a case that the plurality of CSI-RS resources configured by the network device are divided into two resource groups, different CSI-RS resources in the same resource group correspond to the same first coefficient and the same second coefficient, i.e., first coefficients of different CSI-RS resources in the same resource group are the same, and second coefficients of different CSI-RS resources in the same resource group are also the same, and the product of the first coefficient and the second coefficient corresponding to the CSI-RS resource in the one resource group is not equal to that in the other resource group, if the first coefficient corresponding to the CSI-RS resource in the first resource group of the two resource groups is greater than the first coefficient corresponding to the CSI-RS resource in the second resource group of the two resource groups, and the first coefficient corresponding to the CSI-RS resource in the first resource group is equal to the sum of respective first coefficients corresponding to all CSI-RS resources in the second resource group, the terminal may determine the first parameter to be the first coefficient corresponding to the CSI-RS resource in the first resource group, and determine the second parameter as the sum of: (i) the sum of respective second coefficients corresponding to all CSI-RS resources in the first resource group, plus (ii) the second coefficient corresponding to the CSI-RS resource in the second resource group.

For example, the network configures I CSI-RS resources for the terminal, I is an integer greater than 1, and the I CSI-RS resources belong to two resource groups. Each of L resources in a first resource group has a corresponding first coefficient N_{1,i} and a corresponding second coefficient , i ∈ {0. ... . L - 1}, with all the first coefficients being equal, and all the second coefficients being equal. Each of M=I-L resources in a second resource group has a corresponding first coefficient 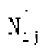 and a corresponding second coefficient 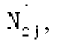 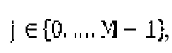 with all the first coefficients being equal, and all the second coefficients being equal. If 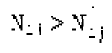 and 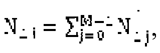 the terminal may determine the first parameter N₁ and the second parameter N₂:

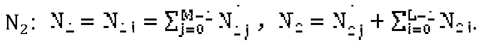

In some embodiments, determining, by the terminal, the first parameter and the second parameter based on the first coefficients and the second coefficients includes: in a case that the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, a first coefficient corresponding to a CSI-RS resource in a first resource group of the two resource groups is less than a first coefficient corresponding to a CSI-RS resource in a second resource group of the two resource groups, and a sum of respective second coefficients corresponding to all CSI-RS resources in the first resource group is equal to a second coefficient corresponding to the CSI-RS resource in the second resource group, determining the first parameter as a sum of: (i) a sum of respective first coefficients corresponding to all CSI-RS resources in the second resource group, plus (ii) the first coefficient corresponding to the CSI-RS resource in the first resource group, and determining the second parameter to be the second coefficient corresponding to the CSI-RS resource in the second resource group.

In the embodiments of the present disclosure, in a case that the plurality of CSI-RS resources are divided into two resource groups, different CSI-RS resources in the same resource group correspond to the same first coefficient and the same second coefficient, i.e., first coefficients of different CSI-RS resources in the same resource group are the same, and second coefficients of different CSI-RS resources in the same resource group are also the same, and the product of the first coefficient and the second coefficient corresponding to the CSI-RS resource in the one resource group is not equal to that in the other resource group, if the first coefficient corresponding to the CSI-RS resource in the first resource group of the two resource groups is less than the first coefficient corresponding to the CSI-RS resource in the second resource group of the two resource groups, and the sum of respective second coefficients corresponding to all CSI-RS resources in the first resource group is equal to the second coefficient corresponding to the CSI-RS resource in the second resource group, the terminal may determine the first parameter as the sum of: (i) the sum of respective first coefficients corresponding to all CSI-RS resources in the second resource group, plus (ii) the first coefficient corresponding to the CSI-RS resource in the first resource group, and determine the second parameter to be the second coefficient corresponding to the CSI-RS resource in the second resource group.

For example, the network configures I CSI-RS resources for the terminal, I is an integer greater than 1, and the I CSI-RS resources belong to two resource groups. Each of L resources in a first resource group has a corresponding first coefficient N_{1,i} and a corresponding second coefficient , i ∈ {0. .. .. L - 1}, with all the first coefficients being equal, and all the second coefficients being equal. Each of M=I-L resources in a second resource group has a corresponding first coefficient 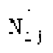 and a corresponding second coefficient 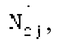 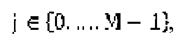 with all the first coefficients being equal, and all the second coefficients being equal. If 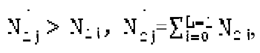 the terminal may determine the first parameter N₁ and the second parameter N₂:

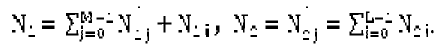

In some embodiments, determining, by the terminal, the first parameter and the second parameter based on the first coefficients and the second coefficients includes: in a case that the plurality of CSI-RS resources are divided into a plurality of resource groups, different CSI-RS resources in a same resource group correspond to a same first coefficient and a same second coefficient, a product of a first coefficient and a second coefficient corresponding to a CSI-RS resource in one resource groups is not equal to that in any other resource group, a first coefficient corresponding to a CSI-RS resource in a first resource group among the plurality of resource groups is greater than a first coefficient corresponding to a CSI-RS resource in each of other resource groups, and the first coefficient corresponding to the CSI-RS resource in the first resource group is equal to a sum of respective first coefficients corresponding to all CSI-RS resources in any one of other resource groups, determining the first parameter to be the first coefficient corresponding to the CSI-RS resource in the first resource group, and determining the second parameter as a sum of: (i) a sum of respective second coefficients corresponding to all CSI-RS resources in the first resource group, plus (ii) a sum of second coefficients each corresponding to a CSI-RS resource in each of other resource groups.

In the embodiments of the present disclosure, in a case that the plurality of CSI-RS resources configured by the network device are divided into the plurality of resource groups, different CSI-RS resources in the same resource group correspond to the same first coefficient and the same second coefficient, the product of the first coefficient and the second coefficient corresponding to the CSI-RS resource in the one resource groups is not equal to that in any other resource group, if the first coefficient corresponding to the CSI-RS resource in the first resource group among the plurality of resource groups is greater than the first coefficient corresponding to the CSI-RS resource in the each of the other resource groups, and the first coefficient corresponding to the CSI-RS resource in the first resource group is equal to the sum of respective first coefficients corresponding to all CSI-RS resources in any one of the other resource groups, the terminal may determine the first parameter to be the first coefficient corresponding to the CSI-RS resource in the first resource group, and determine the second parameter as the sum of: (i) the sum of respective second coefficients corresponding to all CSI-RS resources in the first resource group, plus (ii) the sum of second coefficients each corresponding to the CSI-RS resource in the each of the other resource groups.

For example, the I CSI-RS resources configured by the network device are divided into J resource groups, where I and J are integers greater than 1. Different CSI-RS resources in the same resource group correspond to the same first coefficient and the same second coefficient, and the product of the first coefficient and the second coefficient corresponding to the CSI-RS resource in the one resource groups is not equal to that in any other resource group. If the first coefficient corresponding to the CSI-RS resource 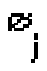 in the first resource group among the plurality of resource groups is greater than the first coefficient corresponding to the CSI-RS resource in the other resource groups, i.e., max{N_{1,i}}=N_{1,j}, where the first coefficient N_{1,j} of the CSI-RS resource in the first resource group is a maximum value, and the first coefficient corresponding to the CSI-RS resource in the first resource group is equal to the sum of respective first coefficients corresponding to all CSI-RS resources in any one of the other resource groups, i.e., 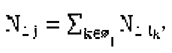 j ≠ l, lₖ is the k-th CSI-RS resource in the first group, and 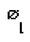 is a CSI-RS resource of the first group, the terminal may determine the first parameter N₁ and the second parameter N₂: 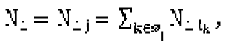 j ≠ l, lₖ is the k-th CSI-RS resource in the first resource group, and the second parameter N₂ is the sum of: (i) the sum of respective second coefficients corresponding to all CSI-RS resources in the first resource group, plus (ii) the sum of second coefficients each corresponding to the CSI-RS resource in each of the other resource groups, i.e., 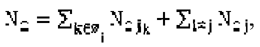 where N_{2,j} is a second coefficient of the j-th CSI-RS resource in the first resource group.

For example, 5 CSI-RS resources configured by the network device are divided into 2 resource groups, and the 2 resource groups are a first resource group and a second resource group, respectively. The first CSI-RS resource in the first resource group comes from a first set of CSI-RS resources, and 4 CSI-RS resources in the second resource group come from a second set of CSI-RS resources. Different CSI-RS resources in the same resource group correspond to the same first coefficient and the same second coefficient, and the product of the first coefficient and the second coefficient corresponding to the CSI-RS resource in the one resource groups is not equal to that in any other resource group. The first coefficient and second coefficient corresponding to the CSI-RS resource in the first resource group are N_{1,1} = 8 and N_{2,1} = 2, respectively, and the first coefficient and second coefficient corresponding to the CSI-RS resource in the second resource group are N_{1,2} = 2 and N_{2,2} = 2. It may be seen that the first coefficient corresponding to the CSI-RS resource in the first resource group is equal to the sum of respective first coefficients corresponding to all CSI-RS resources in any one of the other resource groups, i.e., 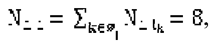 lₖ is the k-th CSI-RS resource in the first group, and 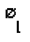 is the CSI-RS resource of the first group, the terminal may determine that the first parameter is the first coefficient corresponding to the CSI-RS resource in the first resource group, i.e., 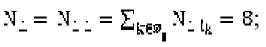 and determine the second parameter is the sum of (i) the sum of respective second coefficients corresponding to all CSI-RS resources in the first resource group, plus (ii) the sum of second coefficients each corresponding to the CSI-RS resource in each of the other resource groups, i.e., N₂ = 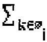 N₂ⱼₖ + ∑_{i≠j} N₂ⱼ =2+2=4; and then determine the number of CSI-RS ports as ${P}_{CSI - RS}^{tot} = 2 {N}_{1} {N}_{2} = 64$.

In some embodiments, determining, by the terminal, the first parameter and the second parameter based on the first coefficients and the second coefficients includes: in a case that the plurality of CSI-RS resources are divided into a plurality of resource groups, different CSI-RS resources in a same resource group correspond to a same first coefficient and a same second coefficient, a product of a first coefficient and a second coefficient corresponding to a CSI-RS resource in one resource groups is not equal to that in any other resource group, a second coefficient corresponding to a CSI-RS resource in a first resource group among the plurality of resource groups is greater than a second coefficient corresponding to a CSI-RS resource in each of other resource groups, and the second coefficient corresponding to the CSI-RS resource in the first resource group is equal to a sum of respective second coefficients corresponding to all CSI-RS resources in any one of other resource groups, determining the first parameter as a sum of: (i) a sum of respective first coefficients corresponding to all CSI-RS resources in the first resource group, plus (ii) a sum of first coefficients each corresponding to a CSI-RS resource in each of other resource groups, and determining the second parameter to be the second coefficient corresponding to the CSI-RS resource in the first resource group.

In the embodiments of the present disclosure, in a case that the plurality of CSI-RS resources configured by the network device are divided into the plurality of resource groups, different CSI-RS resources in the same resource group correspond to the same first coefficient and the same second coefficient, and the product of the first coefficient and the second coefficient corresponding to the CSI-RS resource in the one resource groups is not equal to that in any other resource group, if the second coefficient corresponding to the CSI-RS resource in the first resource group among the plurality of resource groups is greater than the second coefficient corresponding to the CSI-RS resource in each of the other resource groups, and the second coefficient corresponding to the CSI-RS resource in the first resource group is equal to the sum of respective second coefficients corresponding to all CSI-RS resources in any one of the other resource groups, the terminal may determine the first parameter as the sum of: (i) the sum of respective first coefficients corresponding to all CSI-RS resources in the first resource group, plus (ii) the sum of first coefficients each corresponding to the CSI-RS resource in each of the other resource groups, and determine the second parameter to be the second coefficient corresponding to the CSI-RS resource in the first resource group.

For example, the I CSI-RS resources configured by the network device are divided into J resource groups, where I and J are integers greater than 1. Different CSI-RS resources in the same resource group correspond to the same first coefficient and the same second coefficient, and the product of the first coefficient and the second coefficient corresponding to the CSI-RS resource in the one resource groups is not equal to that in any other resource group. If the second coefficient corresponding to the CSI-RS resource in the first resource group among the plurality of resource groups is greater than the second coefficient corresponding to the CSI-RS resource in the other resource groups, i.e., max{N_{2,i}}=N_{2,j}, where the second coefficient N_{2,j} of the CSI-RS resource in the first resource group is a maximum value, and the second coefficient corresponding to the CSI-RS resource in the first resource group is equal to the sum of respective second coefficients corresponding to all CSI-RS resources in any one of the other resource groups, i.e., 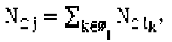 j ≠ l, lₖ is the k-th CSI-RS resource in the first group, and 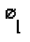 is a CSI-RS resource of the first group, the terminal may determine the first parameter N₁ and the second parameter N₂: the first parameter N₁ is the sum of: (i) the sum of respective first coefficients corresponding to all CSI-RS resources in the first resource group, plus (ii) the sum of first coefficients each corresponding to a CSI-RS resource in each of other resource groups, i.e., 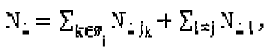 j ≠ l, lₖ is the k-th CSI-RS resource in the first resource group; and the second parameter N₂ is the second coefficient corresponding to the CSI-RS resource in the first resource group, i.e., 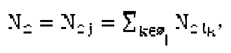 j ≠ l, where N_{2,j} is a second coefficient of the j-th CSI-RS resource in the first resource group.

In some embodiments, determining, by the terminal, the first parameter and the second parameter based on the first coefficients and the second coefficients includes: in a case that the second coefficients corresponding to the plurality of CSI-RS resources are all 1, determining the first parameter to be a sum of first coefficients corresponding to the plurality of CSI-RS resources, and determining the second parameter to be the second coefficient.

In the embodiments of the present disclosure, among the plurality of CSI-RS resources configured by the network device, if the second coefficients corresponding to the plurality of CSI-RS resources are all 1, the terminal may determine that the first parameter is the sum of first coefficients corresponding to the plurality of CSI-RS resources, and determine the second parameter to be the second coefficient.

For example, among the I CSI-RS resources configured by the network device, if the second coefficients corresponding to the plurality of CSI-RS resources are all 1, i.e., the second coefficient N_{2,i} of the i-th CSI-RS resource among the I CSI-RS resources is 1, i.e., N_{2,i}=1, i ∈ {0. .... I - 1}, the terminal may determine the first parameter N₁ and the second parameter N₂: 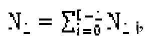 N₂ = N_{2,i} = 1.

In some embodiments, if the second coefficients corresponding to the plurality of CSI-RS resources are all 1, the first coefficient is 2; or the first coefficient is 4; or the first coefficient is 6; or the first coefficient is 8; or the first coefficient is 12; or the first coefficient is 16.

In some embodiments, if the second coefficients corresponding to the plurality of CSI-RS resources are all 1, it is determined that the first parameter is 32; or that the first parameter is 36; or that the first parameter is 48; or that the first parameter is 64.

In some embodiments, determining, by the terminal, the first parameter and the second parameter based on the first coefficients and the second coefficients includes: in a case that the plurality of CSI-RS resources correspond to a same first coefficient and a same second coefficient, determining a first exponent and a second exponent, in which a product of the first exponent and the second exponent is equal to a total number of the plurality of CSI-RS resources; determining the first parameter to be a product of the first coefficient and the first exponent; and determining the second parameter to be a product of the second coefficient and the second exponent.

In the embodiments of the present disclosure, in a case that the plurality of CSI-RS resources correspond to the same first coefficient and the same second coefficient, the terminal may determine the first exponent and the second exponent based on the first coefficients and the second coefficients, in which the product of the first exponent and the second exponent is equal to the total number of the plurality of CSI-RS resources; determine the first parameter to be the product of the first coefficient and the first exponent; and determine the second parameter to be the product of the second coefficient and the second exponent.

In some embodiments, the terminal determines the first exponent and the second exponent based on a protocol agreement, or based on an indication from the network device, or based on an implementation.

In some embodiments, determining, by the terminal, the first exponent and the second exponent includes: receiving indication information sent by the network device, in which the indication information indicates the first exponent and the second exponent; and determining, based on the indication information, the first exponent and the second exponent.

In the embodiments of the present disclosure, the terminal may receive the indication information sent by the network device, the indication information indicates the first exponent and the second exponent, and the terminal may determine the first exponent and the second exponent based on the indication information sent by the network device.

In some embodiments, the terminal receives an RRC signaling sent by the network device, in which the RRC signaling includes the indication information.

In some embodiments, the terminal receives DCI sent by the network device, in which the DCI includes the indication information.

In some embodiments, the terminal receives an MAC CE sent by the network device, in which the MAC CE includes the indication information.

For example, the network device configures I CSI-RS resources for the terminal, and sends the indication information to the terminal, indicating a first exponent N_{g1} and a second exponent M_{g1}, where N_{g1} × M_{g1}=I, N_{g1} is the number of CSI-RS resources in the horizontal dimension, and M_{g1} is the number of CSI-RS resources in the vertical dimension. Each of the I CSI-RS resources has a corresponding first coefficient N_{1,i} and a corresponding second coefficient N_{2,i}, with all the first coefficients being equal, and all the second coefficients being equal. The terminal may determine the first parameter N₁ and the second parameter N₂ : 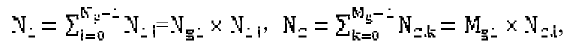 and then determine the number of CSI-RS ports as P_{CSI-RS} = 2N₁N₂.

For example, the network device configures a set of CSI-RS resources for the terminal via the RRC signaling, the set of CSI-RS resources includes 4 CSI-RS resources, Each of the CSI-RS resources has a first coefficient N_{1,i} = 8 and a second coefficient N_{2,i} = 2. The network device also configures a first exponent N_{g1} = 2 and a second exponent M_{g1} = 2 for the terminal. The terminal may determine the first parameter N₁ and the second parameter N₂ : 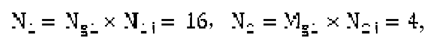 and then the terminal may determine the number of CSI-RS ports as P_{CSI-RS} = 2N₁N₂ = 128.

In some embodiments, determining, by the terminal, the first parameter and the second parameter based on the first coefficients and the second coefficients includes: in a case that the plurality of CSI-RS resources are divided into two resource groups, different CSI-RS resources in a same resource group correspond to a same first coefficient and a same second coefficient, and a first coefficient corresponding to any CSI-RS resource in a first resource group of the two resource groups is not equal to a first coefficient corresponding to any CSI-RS resource in a second resource group of the two resource groups and/or a second coefficient corresponding to any CSI-RS resource in the first resource group is not equal to a second coefficient corresponding to any CSI-RS resource in the second resource group, determining the first parameter and the second parameter based on the first coefficient and the second coefficient corresponding to the CSI-RS resources in the first resource group, and the first coefficient and the second coefficient corresponding to the CSI-RS resources in the second resource group.

In the embodiments of the present disclosure, in a case that the plurality of CSI-RS resources configured by the network device are divided into two resource groups, and different CSI-RS resources in the same resource group correspond to the same first coefficient and the same second coefficient, if the first coefficient corresponding to any CSI-RS resource in the first resource group of the two resource groups is not equal to the first coefficient corresponding to any CSI-RS resource in the second resource group of the two resource groups and/or the second coefficient corresponding to any CSI-RS resource in the first resource group is not equal to the second coefficient corresponding to any CSI-RS resource in the second resource group, the terminal may determine the first parameter and the second parameter based on the first coefficient and the second coefficient corresponding to the CSI-RS resources in the first resource group, and the first coefficient and the second coefficient corresponding to the CSI-RS resources in the second resource group.

In some embodiments, determining, by the terminal, the first parameter and the second parameter based on the first coefficient and the second coefficient corresponding to the CSI-RS resources in the first resource group, and the first coefficient and the second coefficient corresponding to the CSI-RS resources in the second resource group includes: in a case that a sum of respective second coefficients corresponding to all CSI-RS resources in the first resource group is equal to the second coefficient corresponding to any CSI-RS resource in the second resource group, determining the first parameter as a sum of: (i) a sum of respective first coefficients corresponding to all CSI-RS resources in the second resource group, plus (ii) the first coefficient corresponding to any CSI-RS resource in the first resource group, and determining the second parameter to be equal to the second coefficient corresponding to any CSI-RS resource in the second resource group; or in a case that a sum of respective first coefficients corresponding to all CSI-RS resources in the second resource group is equal to the first coefficient corresponding to any CSI-RS resource in the first resource group, determining the first parameter to be equal to the first coefficient corresponding to any CSI-RS resource in the first resource group, and determining the second parameter as a sum of: (i) a sum of respective second coefficients corresponding to all CSI-RS resources in the first resource group, plus (ii) the second coefficient corresponding to any CSI-RS resource in the second resource group; or determining the first parameter as a sum of: (i) a sum of respective first coefficients corresponding to all CSI-RS resources in the second resource group, plus (ii) the first coefficient corresponding to any CSI-RS resource in the first resource group, and determining the second parameter as a sum of: (i) a sum of respective second coefficients corresponding to all CSI-RS resources in the first resource group, plus (ii) the second coefficient corresponding to any CSI-RS resource in the second resource group.

In the embodiments of the present disclosure, in a case that the plurality of CSI-RS resources configured by the network device are divided into two resource groups, different CSI-RS resources in the same resource group correspond to the same first coefficient and the same second coefficient, and the first coefficient corresponding to any CSI-RS resource in the first resource group of the two resource groups is not equal to the first coefficient corresponding to any CSI-RS resource in the second resource group of the two resource groups and/or the second coefficient corresponding to any CSI-RS resource in the first resource group is not equal to the second coefficient corresponding to any CSI-RS resource in the second resource group, if the sum of respective second coefficients corresponding to all CSI-RS resources in the first resource group is equal to the second coefficient corresponding to the CSI-RS resource in the second resource group, the terminal may determine the first parameter as the sum of: (i) the sum of respective first coefficients corresponding to all CSI-RS resources in the second resource group, plus (ii) the first coefficient corresponding to the CSI-RS resource in the first resource group, and determine the second parameter to be the second coefficient corresponding to any CSI-RS resource in the second resource group.

For example, I CSI-RS resources configured by the network device are divided into two resource groups, where I is an integer greater than 1. Each of L≥1 CSI-RS resources in a first resource group has a corresponding first coefficient N_{1,i} and a corresponding second coefficient N_{2,i}, i ∈ {0. ... . L - 1}, with all the first coefficients being equal, and all the second coefficients being equal. Each of M=I-L≥1 CSI-RS resources in a second resource group has a corresponding first coefficient 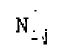 and a corresponding second coefficient 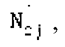 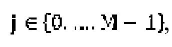 with all the first coefficients being equal, and all the second coefficients being equal, and 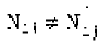 and/or 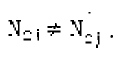 If the sum of respective second coefficients corresponding to all CSI-RS resources in the first resource group is equal to the second coefficient corresponding to any CSI-RS resource in the second resource group, i.e., 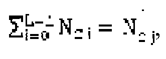 the terminal may determine the first parameter N₁ and the second parameter N₂:

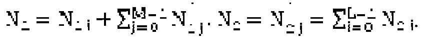

For example, the network device configures a set of CSI-RS resources for the terminal via the RRC signaling, the set of CSI-RS resources includes 3 CSI-RS resources, and the 3 CSI-RS resources are divided into two resource groups. Each of the two CSI-RS resources in the first resource group has a first coefficient N_{1,i} = 8 and a second coefficient N₂ᵢ = 2, i ∈ {1.2}; and the CSI-RS resource in the second resource group has a first coefficient 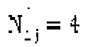 and a second coefficient 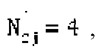 , j ∈ {3}, i.e., L=2, M=I-L=1. Since 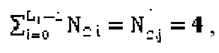 combination and superposition may be performed in a horizontal dimension direction. The terminal may determine the first parameter N₁ and the second parameter N₂: 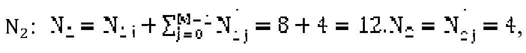 and then determine the number of CSI-RS ports as P_{CSI-RS} = 2N₁N₂ = 96.

In the embodiments of the present disclosure, in a case that the plurality of CSI-RS resources configured by the network device are divided into two resource groups, different CSI-RS resources in the same resource group correspond to the same first coefficient and the same second coefficient, and the first coefficient corresponding to any CSI-RS resource in the first resource group of the two resource groups is not equal to the first coefficient corresponding to any CSI-RS resource in the second resource group of the two resource groups and/or the second coefficient corresponding to any CSI-RS resource in the first resource group is not equal to the second coefficient corresponding to any CSI-RS resource in the second resource group, if the sum of respective first coefficients corresponding to all CSI-RS resources in the second resource group is equal to the first coefficient corresponding to any CSI-RS resource in the first resource group, the terminal may determine the first parameter to be equal to the first coefficient corresponding to any CSI-RS resource in the first resource group, and determine the second parameter as the sum of: (i) the sum of respective second coefficients corresponding to all CSI-RS resources in the first resource group, plus (ii) the second coefficient corresponding to any CSI-RS resource in the second resource group.

For example, I CSI-RS resources configured by the network device are divided into two resource groups, where I is an integer greater than 1, Each of L≥1 CSI-RS resources in the first resource group has a corresponding first coefficient N_{1,i} and a corresponding second coefficient N_{2,i}, i ∈ {0. ... . L - 1}, with all the first coefficients being equal, and all the second coefficients being equal. Each of M=I-L≥1 CSI-RS resources in the second resource group has a corresponding first coefficient 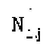 and a corresponding second coefficient 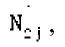 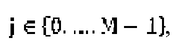 , with all the first coefficients being equal, and all the second coefficients being equal, and 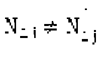 and/or 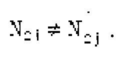 If the sum of respective first coefficients corresponding to all CSI-RS resources in the second resource group is equal to the first coefficient corresponding to any CSI-RS resource in the first resource group, i.e., 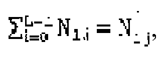 the terminal may determine the first parameter N₁ and the second parameter N₂:

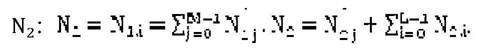

In the embodiments of the present disclosure, in a case that the plurality of CSI-RS resources configured by the network device are divided into two resource groups, different CSI-RS resources in the same resource group correspond to the same first coefficient and the same second coefficient, and the first coefficient corresponding to any CSI-RS resource in the first resource group of the two resource groups is not equal to the first coefficient corresponding to any CSI-RS resource in the second resource group of the two resource groups and/or the second coefficient corresponding to any CSI-RS resource in the first resource group is not equal to the second coefficient corresponding to any CSI-RS resource in the second resource group, the terminal may determine the first parameter as the sum of: (i) the sum of respective first coefficients corresponding to all CSI-RS resources in the second resource group, plus (ii) the second coefficient corresponding to any CSI-RS resource in the second resource group.

For example, I CSI-RS resources configured by the network device are divided into two resource groups, where I is an integer greater than 1. Each of L≥1 CSI-RS resources in the first resource group has a corresponding first coefficient N_{1,i} and a corresponding second coefficient N_{2,i}, i ∈ {0. ... . L - 1}, with all the first coefficients being equal, and all the second coefficients being equal. Each of M=I-L≥1 CSI-RS resources in the second resource group has a corresponding first coefficient 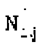 and a corresponding second coefficient 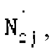 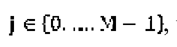 with all the first coefficients being equal, and all the second coefficients being equal, and 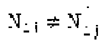 and/or 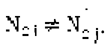 So that the terminal may determine the first parameter N₁ and the second parameter N₂:

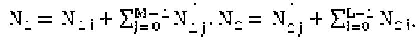

In some embodiments, names of information and other elements are not limited to those specified in the embodiments. The terms such as "information", "message", "signal", "signaling", "report", "configuration", "indication", "instruction", "command", "channel", "parameter", "domain", "field", "symbol", "codebook", "codeword", "codepoint", "bit", "data", "program", "chip", etc., may be used interchangeably.

In some embodiments, the terms such as "codebook", "codeword", "precoding matrix" may be used interchangeably. For example, a codebook may be a set of one or more codewords/precoding matrices.

In some embodiments, the terms such as "downlink control information (DCI)", "downlink (DL) assignment", "DL DCI", "uplink (UL) grant", "UL DCI", etc. may be used interchangeably.

In some embodiments, the terms such as "synchronization signal (SS)", "synchronization signal block (SSB)", "reference signal (RS)", "pilot", "pilot signal", etc. may be used interchangeably.

In some embodiments, the terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel", etc. may be used interchangeably.

In some embodiments, the terms such as "acquire", "obtain", "get", "receive", "transmit", "bidirectional transmission", "send and/or receive" may be used interchangeably, and they may be interpreted as receiving from another entity, obtaining from a protocol, obtaining via processing by itself, autonomously implementing, and other meanings.

In some embodiments, the terms such as "send", "report", "deliver", "transmit", "bidirectional transmission", "send and/or receive" may be used interchangeably.

In some embodiments, the terms such as "certain", "predetermined", "predetermined", "set", "indicated", "a/an", "any", "first", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited herein.

The communication method involved in the embodiments of the present disclosure may include at least one of S201 to S202. For example, S201 may be implemented as an independent embodiment, and S202 may be implemented as an independent embodiment, which is not limited herein.

In some embodiments, S201 is optional, and one or more of these steps may be omitted or replaced in different embodiments.

By implementing the embodiments of the present disclosure, the terminal may determine the number of CSI-RS ports based on the first coefficients and the second coefficients of the plurality of CSI-RS resources configured by the network device, which may enable a configuration of a larger number of CSI-RS ports, so as to support channel measurement with the larger number of CSI-RS ports and improve performance of a communication system.

FIG. 3A is a flowchart of a method for determining information according to the embodiments of the present disclosure. As shown in FIG. 3A, the embodiments of the present disclosure relate to a method for determining information, performed by a terminal. The method includes the following steps at S301A to S302A.

At S301A, first configuration information is obtained.

For optional implementation of S301A, reference may be made to the optional implementation of S201 in FIG. 2 and other related parts in the embodiments related to FIG. 2, which will not be repeated here.

In some embodiments, the terminal receives the first configuration information sent by a network device, which is not limited herein, and may also receive the first configuration information sent by other entities.

In some embodiments, the terminal obtains the first configuration information specified by a protocol.

In some embodiments, the terminal obtains the first configuration information from upper layer(s).

In some embodiments, the terminal obtains the first configuration information by performing processing.

In some embodiments, S301A is omitted, and the terminal autonomously implements the function indicated by the first configuration information, or the above function is default.

In some embodiments, the first configuration information indicates first coefficients and second coefficients corresponding to a plurality of CSI-RS resources.

At S302A, the number of CSI-RS ports is determined based on the first coefficients and the second coefficients.

For optional implementation of S302A, reference may be made to the optional implementation of S202 in FIG. 2 and other related parts in the embodiments related to FIG. 2, which will not be repeated here.

The communication method involved in the embodiments of the present disclosure may include at least one of S301A to S302A. For example, S301A may be implemented as an independent embodiment, and S302A may be implemented as an independent embodiment, which is not limited herein.

In some embodiments, S301A is optional, and one or more of these steps may be omitted or replaced in different embodiments.

FIG. 3B is a flowchart of a method for determining information according to the embodiments of the present disclosure. As shown in FIG. 3B, the embodiments of the present disclosure relate to a method for determining information, performed by a terminal. The method includes the following steps at S301B to S303B.

At S301B, second configuration information is obtained.

For optional implementations of S301B, reference may be made to the optional implementation of S201 in FIG. 2 and other related parts in the embodiments related to FIG. 2, which will not be repeated here.

In some embodiments, the terminal receives the second configuration information sent by a network device, which is not limited herein, and may also receive the second configuration information sent by other entities.

In some embodiments, the terminal obtains the second configuration information specified by a protocol.

In some embodiments, the terminal obtains the second configuration information from upper layer(s).

In some embodiments, the terminal obtains the second configuration information by performing processing.

In some embodiments, S301B is omitted, and the terminal autonomously implements the function indicated by the second configuration information, or the above function is default.

In some embodiments, the second configuration information indicates a plurality of sets of CSI-RS resources, the plurality of sets of CSI-RS resources include the plurality of CSI-RS resources, and CSI-RS resources belonging to a same set of CSI-RS resources belong to a same resource group.

At S302B, first configuration information is obtained.

For optional implementations of S302B, reference may be made to the optional implementations of S201 in FIG. 2 and other related parts in the embodiments related to FIG. 2, which will not be repeated here.

In some embodiments, the terminal receives the first configuration information sent by the network device, which is not limited herein, and may also receive the first configuration information sent by other entities.

In some embodiments, the terminal obtains the first configuration information specified by a protocol.

In some embodiments, the terminal obtains the first configuration information from upper layer(s).

In some embodiments, the terminal obtains the first configuration information by performing processing.

In some embodiments, S302B is omitted, and the terminal autonomously implements the function indicated by the first configuration information, or the above function is default.

In some embodiments, the first configuration information indicates first coefficients and second coefficients corresponding to a plurality of CSI-RS resources.

At S303B, a number of CSI-RS ports is determined based on the first coefficients and the second coefficients.

For optional implementations of S303B, reference may be made to the optional implementation of S202 in FIG. 2 and other related parts in the embodiments related to FIG. 2, which will not be repeated here.

In some embodiments, determining, by the terminal, the number of CSI-RS ports based on the first coefficients and the second coefficients includes: determining a first parameter and a second parameter based on the first coefficients and the second coefficients; and determining the number of CSI-RS ports as twice a product of the first parameter and the second parameter.

In some embodiments, determining, by the terminal, the first parameter and the second parameter based on the first coefficients and the second coefficients includes: in a case that the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, and a first coefficient corresponding to a CSI-RS resource in a first resource group of the two resource groups is equal to a first coefficient corresponding to a CSI-RS resource in a second resource group of the two resource groups, determining the first parameter to be equal to the first coefficient, and determining the second parameter as a sum of: (i) a sum of respective second coefficients corresponding to all CSI-RS resources in the first resource group, plus (ii) a sum of respective second coefficients corresponding to all CSI-RS resources in the second resource group.

In some embodiments, determining, by the terminal, the first parameter and the second parameter based on the first coefficients and the second coefficients includes: in a case that the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, and a second coefficient corresponding to a CSI-RS resource in a first resource group of the two resource groups is equal to a second coefficient corresponding to a CSI-RS resource in a second resource group of the two resource groups, determining the first parameter as a sum of: (i) a sum of respective first coefficients corresponding to all CSI-RS resources in the first resource group, plus (ii) a sum of respective first coefficients corresponding to all CSI-RS resources in the second resource group, and determining the second parameter to be equal to the second coefficient.

In some embodiments, determining, by the terminal, the first parameter and the second parameter based on the first coefficients and the second coefficients includes: in a case that the plurality of CSI-RS resources are divided into two resource groups, different CSI-RS resources in a same resource group correspond to a same first coefficient and a same second coefficient, a products of a first coefficient and a second coefficient corresponding to a CSI-RS resource in one resource group is not equal to that in the other resource group, a first coefficient corresponding to a CSI-RS resource in a first resource group of the two resource groups is greater than a first coefficient corresponding to a CSI-RS resource in a second resource group of the two resource groups, and the first coefficient corresponding to the CSI-RS resource in the first resource group is equal to a sum of respective first coefficients corresponding to all CSI-RS resources in the second resource group, determining the first parameter to be the first coefficient corresponding to the CSI-RS resource in the first resource group, and determining the second parameter as a sum of: (i) a sum of respective second coefficients corresponding to all CSI-RS resources in the first resource group, plus (ii) a second coefficient corresponding to the CSI-RS resource in the second resource group.

In some embodiments, determining, by the terminal, the first parameter and the second parameter based on the first coefficients and the second coefficients includes: in a case that the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, a first coefficient corresponding to a CSI-RS resource in a first resource group of the two resource groups is less than a first coefficient corresponding to a CSI-RS resource in a second resource group of the two resource groups, and a sum of respective second coefficients corresponding to all CSI-RS resources in the first resource group is equal to a second coefficient corresponding to the CSI-RS resource in the second resource group, determining the first parameter as a sum of: (i) a sum of respective first coefficients corresponding to all CSI-RS resources in the second resource group, plus (ii) the first coefficient corresponding to the CSI-RS resource in the first resource group, and determining the second parameter to be the second coefficient corresponding to the CSI-RS resource in the second resource group.

In some embodiments, determining, by the terminal, the first parameter and the second parameter based on the first coefficients and the second coefficients includes: in a case that the plurality of CSI-RS resources are divided into a plurality of resource groups, different CSI-RS resources in a same resource group correspond to a same first coefficient and a same second coefficient, a product of a first coefficient and a second coefficient corresponding to a CSI-RS resource in one resource groups is not equal to that in any other resource group, a first coefficient corresponding to a CSI-RS resource in a first resource group among the plurality of resource groups is greater than a first coefficient corresponding to a CSI-RS resource in each of other resource groups, and the first coefficient corresponding to the CSI-RS resource in the first resource group is equal to a sum of respective first coefficients corresponding to all CSI-RS resources in any one of other resource groups, determining the first parameter to be the first coefficient corresponding to the CSI-RS resource in the first resource group, and determining the second parameter as a sum of: (i) a sum of respective second coefficients corresponding to all CSI-RS resources in the first resource group, plus (ii) a sum of second coefficients each corresponding to a CSI-RS resource in each of other resource groups.

In some embodiments, determining, by the terminal, the first parameter and the second parameter based on the first coefficients and the second coefficients includes: in a case that the plurality of CSI-RS resources are divided into a plurality of resource groups, different CSI-RS resources in a same resource group correspond to a same first coefficient and a same second coefficient, a product of a first coefficient and a second coefficient corresponding to a CSI-RS resource in one resource groups is not equal to that in any other resource group, a second coefficient corresponding to a CSI-RS resource in a first resource group among the plurality of resource groups is greater than a second coefficient corresponding to a CSI-RS resource in each of other resource groups, and the second coefficient corresponding to the CSI-RS resource in the first resource group is equal to a sum of respective second coefficients corresponding to all CSI-RS resources in any one of other resource groups, determining the first parameter as a sum of: (i) a sum of respective first coefficients corresponding to all CSI-RS resources in the first resource group, plus (ii) a sum of first coefficients each corresponding to a CSI-RS resource in each of other resource groups, and determining the second parameter to be the second coefficient corresponding to the CSI-RS resource in the first resource group.

The communication method involved in the embodiments of the present disclosure may include at least one of S301B to S303B. For example, S301B may be implemented as an independent embodiment, S302B may be implemented as an independent embodiment, S303B may be implemented as an independent embodiment, and the combination of S302B and S303B may be implemented as an independent embodiment, which is not limited herein.

In some embodiments, S301B is optional, and one or more of these steps may be omitted or replaced in different embodiments.

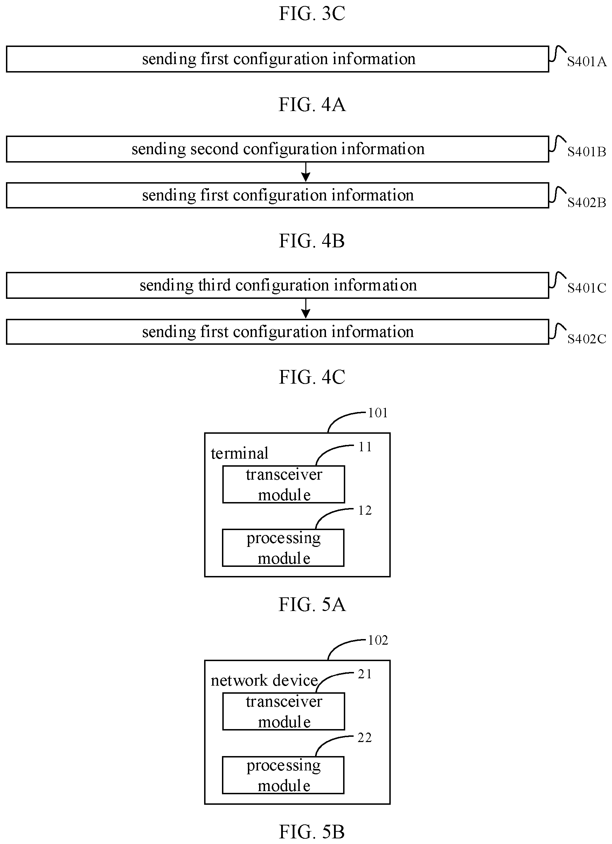

FIG. 3C is a flowchart of a method for determining information according to the embodiments of the present disclosure. As shown in FIG. 3C, the embodiments of the present disclosure relate to a method for determining information, performed by a terminal. The method includes the following steps at S301C to S303C.

At S301C, third configuration information is obtained.

For optional implementations of S301C, reference may be made to the optional implementation of S201 in FIG. 2 and other related parts in the embodiments related to FIG. 2, which will not be repeated here.

In some embodiments, the terminal receives the third configuration information sent by a network device, which is not limited herein, and may also receive the third configuration information sent by other entities.

In some embodiments, the terminal obtains the third configuration information specified by a protocol.

In some embodiments, the terminal obtains the third configuration information from upper layer(s).

In some embodiments, the terminal obtains the third configuration information by performing processing.

In some embodiments, S301C is omitted, and the terminal autonomously implements the function indicated by the third configuration information, or the above function is default.

In some embodiments, the third configuration information indicates a set of CSI-RS resources, and the set of CSI-RS resources includes the plurality of CSI-RS resources.

At S302C, first configuration information is obtained.

For optional implementations of S302C, reference may be made to the optional implementation of S201 in FIG. 2 and other related parts in the embodiments related to FIG. 2, which will not be repeated here.

In some embodiments, the terminal receives the first configuration information sent by the network device, which is not limited herein, and may also receive the first configuration information sent by other entities.

In some embodiments, the terminal obtains the first configuration information specified by a protocol.

In some embodiments, the terminal obtains the first configuration information from upper layer(s).

In some embodiments, the terminal obtains the first configuration information by performing processing.

In some embodiments, S302C is omitted, and the terminal autonomously implements the function indicated by the first configuration information, or the above function is default.

In some embodiments, the first configuration information indicates first coefficients and second coefficients corresponding to a plurality of CSI-RS resources.

At S303C, a number of CSI-RS ports is determined based on the first coefficients and the second coefficients.

For optional implementations of S303C, reference may be made to the optional implementation of S202 in FIG. 2 and other related parts in the embodiments related to FIG. 2, which will not be repeated here.

In some embodiments, determining, by the terminal, the first parameter and the second parameter based on the first coefficients and the second coefficients includes: in a case that the second coefficients corresponding to the plurality of CSI-RS resources are all 1, determining the first parameter to be a sum of first coefficients corresponding to the plurality of CSI-RS resources, and determining the second parameter to be the second coefficient.

In some embodiments, determining, by the terminal, the first parameter and the second parameter based on the first coefficients and the second coefficients includes: in a case that the plurality of CSI-RS resources correspond to a same first coefficient and a same second coefficient, determining a first exponent and a second exponent, in which a product of the first exponent and the second exponent is equal to a total number of the plurality of CSI-RS resources; determining the first parameter to be a product of the first coefficient and the first exponent; and determining the second parameter to be a product of the second coefficient and the second exponent.

In some embodiments, determining, by the terminal, the first exponent and the second exponent includes: receiving indication information sent by the network device, in which the indication information indicates the first exponent and the second exponent; and determining, based on the indication information, the first exponent and the second exponent.

In some embodiments, determining, by the terminal, the first parameter and the second parameter based on the first coefficients and the second coefficients includes: in a case that the plurality of CSI-RS resources are divided into two resource groups, different CSI-RS resources in a same resource group correspond to a same first coefficient and a same second coefficient, and a first coefficient corresponding to any CSI-RS resource in a first resource group of the two resource groups is not equal to a first coefficient corresponding to any CSI-RS resource in a second resource group of the two resource groups and/or a second coefficient corresponding to any CSI-RS resource in the first resource group is not equal to a second coefficient corresponding to any CSI-RS resource in the second resource group, determining the first parameter and the second parameter based on the first coefficient and the second coefficient corresponding to the CSI-RS resources in the first resource group, and the first coefficient and the second coefficient corresponding to the CSI-RS resources in the second resource group.

In some embodiments, determining, by the terminal, the first parameter and the second parameter based on the first coefficient and the second coefficient corresponding to the CSI-RS resources in the first resource group, and the first coefficient and the second coefficient corresponding to the CSI-RS resources in the second resource group includes: in a case that a sum of respective second coefficients corresponding to all CSI-RS resources in the first resource group is equal to the second coefficient corresponding to any CSI-RS resource in the second resource group, determining the first parameter as a sum of: (i) a sum of respective first coefficients corresponding to all CSI-RS resources in the second resource group, plus (ii) the first coefficient corresponding to any CSI-RS resource in the first resource group, and determining the second parameter to be equal to the second coefficient corresponding to any CSI-RS resource in the second resource group; or in a case that a sum of respective first coefficients corresponding to all CSI-RS resources in the second resource group is equal to the first coefficient corresponding to any CSI-RS resource in the first resource group, determining the first parameter to be equal to the first coefficient corresponding to any CSI-RS resource in the first resource group, and determining the second parameter as a sum of: (i) a sum of respective second coefficients corresponding to all CSI-RS resources in the first resource group, plus (ii) the second coefficient corresponding to any CSI-RS resource in the second resource group; or determining the first parameter as a sum of: (i) a sum of respective first coefficients corresponding to all CSI-RS resources in the second resource group, plus (ii) the first coefficient corresponding to any CSI-RS resource in the first resource group, and determining the second parameter as a sum of: (i) a sum of respective second coefficients corresponding to all CSI-RS resources in the first resource group, plus (ii) the second coefficient corresponding to any CSI-RS resource in the second resource group.

The communication method involved in the embodiments of the present disclosure may include at least one of S301C to S303C. For example, S301C may be implemented as an independent embodiment, S302C may be implemented as an independent embodiment, S303C may be implemented as an independent embodiment, and the combination of S302C and S303C may be implemented as an independent embodiment, which is not limited herein.

In some embodiments, S301C is optional, and one or more of these steps may be omitted or replaced in different embodiments.

FIG. 4A is a flowchart of a method for determining information according to the embodiments of the present disclosure. As shown in FIG. 4A, the embodiments of the present disclosure relate to a method for determining information, performed by a network device. The method includes the following step at S401A.

At S401A, first configuration information is sent.

For optional implementations of S401A, reference may be made to the optional implementation of S201 in FIG. 2 and other related parts in the embodiments related to FIG. 2, which will not be repeated here.

In some embodiments, the network device sends the first configuration information to a terminal, which is not limited herein, and may also send the first configuration information to other entities.

In some embodiments, the first configuration information indicates first coefficients and second coefficients corresponding to a plurality of CSI-RS resources; and the first coefficients and the second coefficients are used by the terminal to determine a number of CSI-RS ports.

Optionally, the first configuration information is used by the terminal to determine the number of CSI-RS ports based on the first coefficients and the second coefficients. For optional implementations, reference may be made to the optional implementation of S202 in FIG. 2 and other related parts in the embodiments related to FIG. 2, which will not be repeated here.

FIG. 4B is a flowchart of a method for determining information according to the embodiments of the present disclosure. As shown in FIG. 4B, the embodiments of the present disclosure relate to a method for determining information, performed by a network device. The method includes the following steps at S401B to S402B.

At S401B, second configuration information is sent.

For optional implementations of S401B, reference may be made to the optional implementation of S201 in FIG. 2 and other related parts in the embodiments related to FIG. 2, which will not be repeated here.

In some embodiments, the network device sends the second configuration information to a terminal, which is not limited herein, and may also send the second configuration information to other entities.

In some embodiments, the second configuration information indicates a plurality of sets of CSI-RS resources, the plurality of sets of CSI-RS resources include the plurality of CSI-RS resources, and CSI-RS resources belonging to a same set of CSI-RS resources belong to a same resource group.

Optionally, the second configuration information is used by the terminal to determine the plurality of CSI-RS resources in the plurality of sets of CSI-RS resources. For optional implementations, reference may be made to the optional implementation of S202 in FIG. 2 and other related parts in the embodiments related to FIG. 2, which will not be repeated here.

At S402B, first configuration information is sent.

For optional implementations of S402B, reference may be made to the optional implementation of S201 in FIG. 2 and other related parts in the embodiments related to FIG. 2, which will not be repeated here.

In some embodiments, the network device sends the first configuration information to the terminal, which is not limited herein, and may also send the first configuration information to other entities.

In some embodiments, the first configuration information indicates first coefficients and second coefficients corresponding to a plurality of CSI-RS resources; and the first coefficients and the second coefficients are used by the terminal to determine a number of CSI-RS ports.

Optionally, the first configuration information is used by the terminal to determine the number of CSI-RS ports based on the first coefficients and the second coefficients. For optional implementations, reference may be made to the optional implementation of S202 in FIG. 2 and other related parts in the embodiments related to FIG. 2, which will not be repeated here.

In some embodiments, the first coefficients and the second coefficients are used by the terminal to determine a first parameter and a second parameter; and the first parameter and the second parameter are used by the terminal to determine the number of CSI-RS ports as twice a product of the first parameter and the second parameter.

In some embodiments, in a case that the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, and a first coefficient corresponding to a CSI-RS resource in a first resource group of the two resource groups is equal to a first coefficient corresponding to a CSI-RS resource in a second resource group of the two resource groups, the first coefficient and the second coefficient are used by the terminal to determine the first parameter to be equal to the first coefficient, and the second parameter is a sum of: (i) a sum of respective second coefficients corresponding to all CSI-RS resources in the first resource group, plus (ii) a sum of respective second coefficients corresponding to all CSI-RS resources in the second resource group.

In some embodiments, in a case that the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, and a second coefficient corresponding to a CSI-RS resource in a first resource group of the two resource groups is equal to a second coefficient corresponding to a CSI-RS resource in a second resource group of the two resource groups, the first coefficient and the second coefficient are used by the terminal to determine the first parameter as a sum of: (i) a sum of respective first coefficients corresponding to all CSI-RS resources in the first resource group, plus (ii) a sum of respective first coefficients corresponding to all CSI-RS resources in the second resource group, and determine the second parameter to be equal to the second coefficient.

In some embodiments, in a case that the plurality of CSI-RS resources are divided into two resource groups, different CSI-RS resources in a same resource group correspond to a same first coefficient and a same second coefficient, a products of a first coefficient and a second coefficient corresponding to a CSI-RS resource in one resource group is not equal to that in the other resource group, a first coefficient corresponding to a CSI-RS resource in a first resource group of the two resource groups is greater than a first coefficient corresponding to a CSI-RS resource in a second resource group of the two resource groups, and the first coefficient corresponding to the CSI-RS resource in the first resource group is equal to a sum of respective first coefficients corresponding to all CSI-RS resources in the second resource group, the first coefficient and the second coefficient are used by the terminal to determine the first parameter to be the first coefficient corresponding to the CSI-RS resource in the first resource group, and determine the second parameter as a sum of: (i) a sum of respective second coefficients corresponding to all CSI-RS resources in the first resource group, plus (ii) a second coefficient corresponding to the CSI-RS resource in the second resource group.

In some embodiments, in a case that the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, a first coefficient corresponding to a CSI-RS resource in a first resource group of the two resource groups is less than a first coefficient corresponding to a CSI-RS resource in a second resource group of the two resource groups, and a sum of respective second coefficients corresponding to all CSI-RS resources in the first resource group is equal to a second coefficient corresponding to the CSI-RS resource in the second resource group, the first coefficient and the second coefficient are used by the terminal to determine the first parameter as a sum of: (i) a sum of respective first coefficients corresponding to all CSI-RS resources in the second resource group, plus (ii) the first coefficient corresponding to the CSI-RS resource in the first resource group, and determine the second parameter to be the second coefficient corresponding to the CSI-RS resource in the second resource group.

In some embodiments, in a case that the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, a first coefficient corresponding to a CSI-RS resource in a first resource group among the plurality of resource groups is greater than a first coefficient corresponding to a CSI-RS resource in each of other resource groups, and the first coefficient corresponding to the CSI-RS resource in the first resource group is equal to a sum of respective first coefficients corresponding to all CSI-RS resources in any one of other resource groups, the first coefficient and the second coefficient are used by the terminal to determine the first parameter to be the first coefficient corresponding to the CSI-RS resource in the first resource group, and determine the second parameter as a sum of: (i) a sum of respective second coefficients corresponding to all CSI-RS resources in the first resource group, plus (ii) a sum of second coefficients each corresponding to a CSI-RS resource in each of other resource groups.

In some embodiments, in a case that the plurality of CSI-RS resources are divided into a plurality of resource groups, different CSI-RS resources in a same resource group correspond to a same first coefficient and a same second coefficient, a product of a first coefficient and a second coefficient corresponding to a CSI-RS resource in one resource groups is not equal to that in any other resource group, a second coefficient corresponding to a CSI-RS resource in a first resource group among the plurality of resource groups is greater than a second coefficient corresponding to a CSI-RS resource in each of other resource groups, and the second coefficient corresponding to the CSI-RS resource in the first resource group is equal to a sum of respective second coefficients corresponding to all CSI-RS resources in any one of other resource groups, the first coefficient and the second coefficient are used by the terminal to determine the first parameter as a sum of: (i) a sum of respective first coefficients corresponding to all CSI-RS resources in the first resource group, plus (ii) a sum of first coefficients each corresponding to a CSI-RS resource in each of other resource groups, and determine the second parameter to be the second coefficient corresponding to the CSI-RS resource in the first resource group.

FIG. 4C is a flowchart of another method for determining information according to the embodiments of the present disclosure. As shown in FIG. 4C, the embodiments of the present disclosure relate to a method for determining information, performed by a network device. The method includes the following steps at S401C to S402C.

At S401C, third configuration information is sent.

For optional implementations of S401C, reference may be made to the optional implementation of S201 in FIG. 2 and other related parts in the embodiments related to FIG. 2, which will not be repeated here.

In some embodiments, the network device sends the third configuration information to a terminal, which is not limited herein, and may also send the third configuration information to other entities.

In some embodiments, the third configuration information indicates a set of CSI-RS resources, and the set of CSI-RS resources includes the plurality of CSI-RS resources.

Optionally, the third configuration information is used by the terminal to determine the plurality of CSI-RS resources in the set of CSI-RS resources. For optional implementations, reference may be made to the optional implementation of S202 in FIG. 2 and other related parts in the embodiments related to FIG. 2, which will not be repeated here.

At S402C, first configuration information is sent.

For optional implementations of S402C, reference may be made to the optional implementation of S201 in FIG. 2 and other related parts in the embodiments related to FIG. 2, which will not be repeated here.

In some embodiments, the network device sends the first configuration information to the terminal, which is not limited herein, and may also send the first configuration information to other entities.

In some embodiments, the first configuration information indicates first coefficients and second coefficients corresponding to a plurality of CSI-RS resources; and the first coefficients and the second coefficients are used by the terminal to determine the number of CSI-RS ports.

Optionally, the first configuration information is used by the terminal to determine the number of CSI-RS ports based on the first coefficients and the second coefficients. For optional implementations, reference may be made to the optional implementation of S202 in FIG. 2 and other related parts in the embodiments related to FIG. 2, which will not be repeated here.

In some embodiments, in a case that the second coefficients corresponding to the plurality of CSI-RS resources are all 1, the first coefficient and the second coefficient are used by the terminal to determine that the first parameter is a sum of first coefficients corresponding to the plurality of CSI-RS resources, and the second parameter is the second coefficient.

In some embodiments, in a case that the plurality of CSI-RS resources correspond to a same first coefficient and a same second coefficient, the first coefficient and the second coefficient are used by the terminal to determine a first exponent and a second exponent, in which a product of the first exponent and the second exponent is equal to a total number of the plurality of CSI-RS resources; determine the first parameter to be a product of the first coefficient and the first exponent; and determine the second parameter to be a product of the second coefficient and the second exponent.

In some embodiments, the above method further includes: sending, by the network device, indication information to the terminal, in which the indication information indicates the first exponent and the second exponent.

In some embodiments, in a case that the plurality of CSI-RS resources are divided into two resource groups, different CSI-RS resources in a same resource group correspond to a same first coefficient and a same second coefficient, and a first coefficient corresponding to any CSI-RS resource in a first resource group of the two resource groups is not equal to a first coefficient corresponding to any CSI-RS resource in a second resource group of the two resource groups and/or a second coefficient corresponding to any CSI-RS resource in the first resource group is not equal to a second coefficient corresponding to any CSI-RS resource in the second resource group, the first coefficient and the second coefficient corresponding to the CSI-RS resources in the first resource group, and the first coefficient and the second coefficient corresponding to the CSI-RS resources in the second resource group are used by the terminal to determine the first parameter and the second parameter.

In some embodiments, in a case that a sum of respective second coefficients corresponding to all CSI-RS resources in the first resource group is equal to the second coefficient corresponding to any CSI-RS resource in the second resource group, the first coefficient and the second coefficient corresponding to the CSI-RS resources in the first resource group, and the first coefficient and the second coefficient corresponding to the CSI-RS resources in the second resource group are used by the terminal to determine the first parameter as a sum of: (i) a sum of respective first coefficients corresponding to all CSI-RS resources in the second resource group, plus (ii) the first coefficient corresponding to any CSI-RS resource in the first resource group, and determine the second parameter to be equal to the second coefficient corresponding to any CSI-RS resource in the second resource group; or in a case that a sum of respective first coefficients corresponding to all CSI-RS resources in the second resource group is equal to the first coefficient corresponding to any CSI-RS resource in the first resource group, the first coefficient and the second coefficient corresponding to the CSI-RS resources in the first resource group, and the first coefficient and the second coefficient corresponding to the CSI-RS resources in the second resource group are used by the terminal to determine the first parameter to be equal to the first coefficient corresponding to any CSI-RS resource in the first resource group, and determine the second parameter as a sum of: (i) a sum of respective second coefficients corresponding to all CSI-RS resources in the first resource group, plus (ii) the second coefficient corresponding to any CSI-RS resource in the second resource group; or the first coefficient and the second coefficient corresponding to the CSI-RS resources in the first resource group, and the first coefficient and the second coefficient corresponding to the CSI-RS resources in the second resource group are used by the terminal to determine the first parameter as a sum of: (i) a sum of respective first coefficients corresponding to all CSI-RS resources in the second resource group, plus (ii) the first coefficient corresponding to any CSI-RS resource in the first resource group, and determine the second parameter as a sum of: (i) a sum of respective second coefficients corresponding to all CSI-RS resources in the first resource group, plus (ii) the second coefficient corresponding to any CSI-RS resource in the second resource group.

The embodiments of the present disclosure also provide an apparatus for implementing any one of the above methods. For example, an apparatus is provided, including units or modules for implementing the steps performed by the terminal in any one of the above methods. For another example, another apparatus is provided, including units or modules for implementing the steps performed by the network device (for example, an access network device, a core network function node, a core network device, etc.) in any one of the above methods.

It should be understood that the division of units or modules in the above apparatuses is merely a division of logical functions. In actual implementations, the units or modules may be fully or partially integrated into a single physical entity or may be physically separated. In addition, the units or modules in the apparatus may be implemented in the form of software called by a processor. For example, the apparatus includes a processor, which is connected to a memory for storing instructions. The processor calls the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units or modules are realized by designing logical relationships among components in the circuit. For another example, in another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of software called by the processor, or fully implemented in the form of the hardware circuit, or partially implemented in the form of software called by the processor and the remaining part implemented in the form of the hardware circuit.

In the embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units or modules. In addition, the hardware circuit may be designed specifically for artificial intelligence and may be understood as an ASIC, such as a neural network processing unit (NPU), a tensor processing unit (TPU), or a deep learning processing unit (DPU).

FIG. 5A is a block diagram of a terminal according to the embodiments of the present disclosure. As shown in FIG. 5A, the terminal 101 may include: at least one of a transceiver module 11 or a processing module 12.

In some embodiments, the transceiver module 11 is configured to receive first configuration information sent by a network device, in which the first configuration information indicates first coefficients and second coefficients corresponding to a plurality of CSI-RS resources; and the processing module 12 is configured to determine a number of CSI-RS ports based on the first coefficients and the second coefficients.

The transceiver module 11 is configured to perform at least one of the communication steps (for example, S201, S301A, S301B~S302B, S301C~S302C, S401A, S401B~S402B, S401C~S402C, which is not limited herein) performed by the terminal 101 in any one of the above methods, which will not be repeated here. Optionally, the processing module 12 is configured to perform at least one of other steps (for example, S202, S302A, S303B, S303C, which is not limited herein) performed by the terminal 101 in any one of the above methods, which will not be repeated here.

In some embodiments, the transceiver module may include a sending module and/or a receiving module, which may be separate or integrated. Optionally, the transceiver module may be interchanged with a transceiver.

In some embodiments, the processing module may be a module or may include a plurality of sub-modules. Optionally, the plurality of sub-modules perform all or part of the steps required to be performed by the processing module. Optionally, the processing module may be interchanged with a processor.

FIG. 5B is a block diagram of a network device according to the embodiments of the present disclosure. As shown in FIG. 5B, the network device 102 may include: at least one of a transceiver module 21 or a processing module 22.

In some embodiments, the transceiver module 21 is configured to send first configuration information to a terminal, in which the first configuration information indicates first coefficients and second coefficients corresponding to a plurality of CSI-RS resources; and the first coefficients and the second coefficients are used by the terminal to determine a number of CSI-RS ports.

The transceiver module 21 is configured to perform at least one of the communication steps (for example, S201, S301A, S301B~S302B, S301C~S302C, S401A, S401B~S402B, S401C~S402C, which is not limited herein) performed by the network device 102 in any one of the above methods, which will not be repeated here. Optionally, the processing module 22 is configured to perform at least one of other steps performed by the network device 102 in any one of the above methods, which will not be repeated here.

In some embodiments, the transceiver module may include a sending module and/or a receiving module, which may be separate or integrated. Optionally, the transceiver module may be interchanged with a transceiver.

In some embodiments, the processing module may be a module or may include a plurality of sub-modules. Optionally, the plurality of sub-modules perform all or part of the steps required to be performed by the processing module. Optionally, the processing module may be interchanged with a processor.

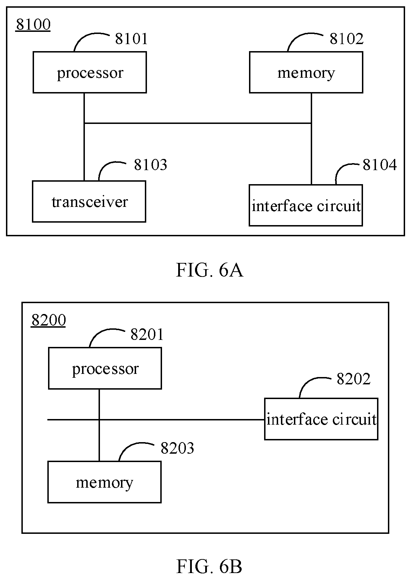

FIG. 6A is a block diagram of a communication device 8100 according to the embodiments of the present disclosure. The communication device 8100 may be a network device (for example, an access network device, a core network device, etc.), or a terminal (for example, a user equipment, etc.), or a chip, a chip system, or a processor that supports a network device to implement any one of the above methods, or a chip, a chip system, or a processor that supports a terminal to implement any one of the above methods. The communication device 8100 may be used to implement the methods described in the above method embodiments. For details, reference may be made to the description in the above method embodiments.

As shown in FIG. 6A, the communication device 8100 includes one or more processors 8101. The processor 8101 may be a general-purpose processor or a special-purpose processor. For example, it may be a baseband processor or a central processing unit. The baseband processor may be used to process communication protocols and communication data, and the central processing unit may be configured to control communication devices (such as base stations, baseband chips, terminals, terminal chips, DU or CU, etc.), execute computer programs and process computer program data. Optionally, the communication device 8100 is configured to perform any one of the above methods. Optionally, the one or more processors 8101 are configured to invoke instructions to cause the communication device 8100 to perform any one of the above methods.

In some embodiments, the communication device 8100 further includes one or more transceivers 8103. When the communication device 8100 includes the one or more transceivers 8103, the transceiver 8103 performs at least one of the communication steps (for example, S201, S301A, S301B~S302B, S301C~S302C, S401A, S401B~S402B, S401C~S402C, which is not limited herein) in the above methods, and the processor 8101 performs at least one of other steps (for example, S202, S302A, S303B, S303C, which is not limited herein). In an optional embodiment, the transceiver may include a receiver and/or a transmitter, which may be separate or integrated. Optionally, the terms such as transceiver, transceiver unit, transceiver machine, transceiver circuit, interface circuit, interface, etc. may be used interchangeably; the terms such as transmitter, transmitting unit, transmitter machine, transmitting circuit, etc. may be used interchangeably; and the terms such as receiver, receiving unit, receiver machine, receiving circuit, etc. may be used interchangeably.

In some embodiments, the communication device 8100 further includes one or more memories 8102 for storing data. Optionally, all or part of the one or more memories 8102 may be located outside the communication device 8100. In optional embodiments, the communication device 8100 may include one or more interface circuits 8104. Optionally, the interface circuit 8104 is connected to the memory 8102, and the interface circuit 8104 may be used to receive data from the memory 8102 or other devices, and may be used to send the data to the memory 8102 or other devices. For example, the interface circuit 8104 may read data stored in the memory 8102 and send the data to the processor 8101.

The communication device 8100 in the description of the above embodiments may be a network device or a terminal, but the scope of the communication device 8100 described in the disclosure is not limited thereto, and the structure of the communication device 8100 may not be limited by FIG. 6A. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 6B is a block diagram of a chip 8200 according to the embodiments of the present disclosure. For the case where the communication device 8100 may be a chip or a chip system, reference may be made to the block diagram of the chip 8200 shown in FIG. 6B, which is not limited herein.

The chip 8200 includes one or more processors 8201. The chip 8200 is used to perform any one of the above methods.

In some embodiments, the chip 8200 further includes one or more interface circuits 8202. Optionally, the terms such as interface circuit, interface, transceiver pin may be used interchangeably. In some embodiments, the chip 8200 further includes one or more memories 8203 for storing data. Optionally, all or part of the one or more memories 8203 may be located outside the chip 8200. Optionally, the interface circuit 8202 is connected to the memory 8203, and the interface circuit 8202 may be used to receive data from the memory 8203 or other devices, and the interface circuit 8202 may be used to send the data to the memory 8203 or other devices. For example, the interface circuit 8202 may read the data stored in the memory 8203 and send the data to the processor 8201.

In some embodiments, the interface circuit 8202 performs at least one of the communication steps (for example, S201, S301A, S301B~S302B, S301C~S302C, S401A, S401B~S402B, S401C~S402C, which is not limited herein) in the above methods. Performing, by the interface circuit 8202, at least one of the communication steps in the above methods means, for example, the interface circuit 8202 performs data exchange among the processor 8201, the chip 8200, the memory 8203, or a transceiver. In some embodiments, the processor 8201 performs at least one of other steps (for example, S202, S302A, S303B, S303C, which is not limited herein).

The present disclosure also provides a storage medium for storing instructions. When the instructions are executed on a communication device 8100, the communication device 8100 is caused to perform any one of the above methods. Optionally, the storage medium is an electronic storage medium. Optionally, the storage medium is a computer-readable storage medium, which is not limited herein, and may also be a storage medium readable by other devices. Optionally, the storage medium may be a non-transitory storage medium, which is not limited herein, and may also be a transitory storage medium.

The present disclosure also provides a program product. When the program product is executed by the communication device 8100, the communication device 8100 is caused to perform any one of the above methods. Optionally, the program product is a computer program product.

The present disclosure also provides a computer program. When the computer program is running on a computer, the computer is caused to perform any one of the above methods.

Those skilled in the related art may realize that, in combination with units and algorithm steps of the examples described in the embodiments of the present disclosure, may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the present disclosure. However, the protection scope of the present disclosure is not limited here. Changes and substitutions that may be easily considered by those skilled in the art shall be included within the protection scope of the present disclosure. Therefore, the protection scope of the present disclosure shall be subject to the protection scope of claims.

## Claims

1. A method for determining information, performed by a terminal, comprising:
receiving first configuration information sent by a network device, wherein the first configuration information indicates first coefficients and second coefficients corresponding to a plurality of channel state information-reference signal (CSI-RS) resources; and
determining a number of CSI-RS ports based on the first coefficients and the second coefficients.

2. The method of claim 1, wherein determining the number of CSI-RS ports based on the first coefficients and the second coefficients comprises:
determining a first parameter and a second parameter based on the first coefficients and the second coefficients; and
determining the number of CSI-RS ports as twice a product of the first parameter and the second parameter.

3. The method of claim 2, wherein determining the first parameter and the second parameter based on the first coefficients and the second coefficients comprises:
in a case that the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, and a first coefficient corresponding to a CSI-RS resource in a first resource group of the two resource groups is equal to a first coefficient corresponding to a CSI-RS resource in a second resource group of the two resource groups, determining the first parameter to be equal to the first coefficient, and determining the second parameter as a sum of: (i) a sum of respective second coefficients corresponding to all CSI-RS resources in the first resource group, plus (ii) a sum of respective second coefficients corresponding to all CSI-RS resources in the second resource group.

4. The method of claim 2, wherein determining the first parameter and the second parameter based on the first coefficients and the second coefficients comprises:
in a case that the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, and a second coefficient corresponding to a CSI-RS resource in a first resource group of the two resource groups is equal to a second coefficient corresponding to a CSI-RS resource in a second resource group of the two resource groups, determining the first parameter as a sum of: (i) a sum of respective first coefficients corresponding to all CSI-RS resources in the first resource group, plus (ii) a sum of respective first coefficients corresponding to all CSI-RS resources in the second resource group, and determining the second parameter to be equal to the second coefficient.

5. The method of claim 2, wherein determining the first parameter and the second parameter based on the one or more first coefficients and the second coefficients comprises:
in a case that the plurality of CSI-RS resources are divided into two resource groups, different CSI-RS resources in a same resource group correspond to a same first coefficient and a same second coefficient, a products of a first coefficient and a second coefficient corresponding to a CSI-RS resource in one resource group is not equal to that in the other resource group, a first coefficient corresponding to a CSI-RS resource in a first resource group of the two resource groups is greater than a first coefficient corresponding to a CSI-RS resource in a second resource group of the two resource groups, and the first coefficient corresponding to the CSI-RS resource in the first resource group is equal to a sum of respective first coefficients corresponding to all CSI-RS resources in the second resource group, determining the first parameter to be the first coefficient corresponding to the CSI-RS resource in the first resource group, and determining the second parameter as a sum of: (i) a sum of respective second coefficients corresponding to all CSI-RS resources in the first resource group, plus (ii) a second coefficient corresponding to the CSI-RS resource in the second resource group.

6. The method of claim 2, wherein determining the first parameter and the second parameter based on the first coefficients and the second coefficients comprises:
in a case that the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, a first coefficient corresponding to a CSI-RS resource in a first resource group of the two resource groups is less than a first coefficient corresponding to a CSI-RS resource in a second resource group of the two resource groups, and a sum of respective second coefficients corresponding to all CSI-RS resources in the first resource group is equal to a second coefficient corresponding to the CSI-RS resource in the second resource group, determining the first parameter as a sum of: (i) a sum of respective first coefficients corresponding to all CSI-RS resources in the second resource group, plus (ii) the first coefficient corresponding to the CSI-RS resource in the first resource group, and determining the second parameter to be the second coefficient corresponding to the CSI-RS resource in the second resource group.

7. The method of claim 2, wherein determining the first parameter and the second parameter based on the first coefficients and the second coefficients comprises:
in a case that the plurality of CSI-RS resources are divided into a plurality of resource groups, different CSI-RS resources in a same resource group correspond to a same first coefficient and a same second coefficient, a product of a first coefficient and a second coefficient corresponding to a CSI-RS resource in one resource groups is not equal to that in any other resource group, a first coefficient corresponding to a CSI-RS resource in a first resource group among the plurality of resource groups is greater than a first coefficient corresponding to a CSI-RS resource in each of other resource groups, and the first coefficient corresponding to the CSI-RS resource in the first resource group is equal to a sum of respective first coefficients corresponding to all CSI-RS resources in any one of other resource groups, determining the first parameter to be the first coefficient corresponding to the CSI-RS resource in the first resource group, and determining the second parameter as a sum of: (i) a sum of respective second coefficients corresponding to all CSI-RS resources in the first resource group, plus (ii) a sum of second coefficients each corresponding to a CSI-RS resource in each of other resource groups.

8. The method of claim 2, wherein determining the first parameter and the second parameter based on the first coefficients and the second coefficients comprises:
in a case that the plurality of CSI-RS resources are divided into a plurality of resource groups, different CSI-RS resources in a same resource group correspond to a same first coefficient and a same second coefficient, a product of a first coefficient and a second coefficient corresponding to a CSI-RS resource in one resource groups is not equal to that in any other resource group, a second coefficient corresponding to a CSI-RS resource in a first resource group among the plurality of resource groups is greater than a second coefficient corresponding to a CSI-RS resource in each of other resource groups, and the second coefficient corresponding to the CSI-RS resource in the first resource group is equal to a sum of respective second coefficients corresponding to all CSI-RS resources in any one of other resource groups, determining the first parameter as a sum of: (i) a sum of respective first coefficients corresponding to all CSI-RS resources in the first resource group, plus (ii) a sum of first coefficients each corresponding to a CSI-RS resource in each of other resource groups, and determining the second parameter to be the second coefficient corresponding to the CSI-RS resource in the first resource group.

9. The method of any one of claims 1 to 8, further comprising:
receiving second configuration information sent by the network device, wherein the second configuration information indicates a plurality of sets of CSI-RS resources, the plurality of sets of CSI-RS resources comprise the plurality of CSI-RS resources, and CSI-RS resources belonging to a same set of CSI-RS resources belong to a same resource group.

10. The method of claim 2, wherein determining the first parameter and the second parameter based on the first coefficients and the second coefficients comprises:
in a case that the second coefficients corresponding to the plurality of CSI-RS resources are all 1, determining the first parameter to be a sum of first coefficients corresponding to the plurality of CSI-RS resources, and determining the second parameter to be the second coefficient.

11. The method of claim 2, wherein determining the first parameter and the second parameter based on the first coefficients and the second coefficients comprises:
in a case that the plurality of CSI-RS resources correspond to a same first coefficient and a same second coefficient, determining a first exponent and a second exponent, wherein a product of the first exponent and the second exponent is equal to a total number of the plurality of CSI-RS resources; determining the first parameter to be a product of the first coefficient and the first exponent; and determining the second parameter to be a product of the second coefficient and the second exponent.

12. The method of claim 11, wherein determining the first exponent and the second exponent comprises:
receiving indication information sent by the network device, wherein the indication information indicates the first exponent and the second exponent; and
determining, based on the indication information, the first exponent and the second exponent.

13. The method of claim 2, wherein determining the first parameter and the second parameter based on the first coefficients and the second coefficients comprises:
in a case that the plurality of CSI-RS resources are divided into two resource groups, different CSI-RS resources in a same resource group correspond to a same first coefficient and a same second coefficient, and a first coefficient corresponding to any CSI-RS resource in a first resource group of the two resource groups is not equal to a first coefficient corresponding to any CSI-RS resource in a second resource group of the two resource groups and/or a second coefficient corresponding to any CSI-RS resource in the first resource group is not equal to a second coefficient corresponding to any CSI-RS resource in the second resource group, determining the first parameter and the second parameter based on the first coefficient and the second coefficient corresponding to the CSI-RS resources in the first resource group, and the first coefficient and the second coefficient corresponding to the CSI-RS resources in the second resource group.

14. The method of claim 13, wherein determining the first parameter and the second parameter based on the first coefficient and the second coefficient corresponding to the CSI-RS resources in the first resource group, and the first coefficient and the second coefficient corresponding to the CSI-RS resources in the second resource group comprises:
in a case that a sum of respective second coefficients corresponding to all CSI-RS resources in the first resource group is equal to the second coefficient corresponding to any CSI-RS resource in the second resource group, determining the first parameter as a sum of: (i) a sum of respective first coefficients corresponding to all CSI-RS resources in the second resource group, plus (ii) the first coefficient corresponding to any CSI-RS resource in the first resource group, and determining the second parameter to be equal to the second coefficient corresponding to any CSI-RS resource in the second resource group; or
in a case that a sum of respective first coefficients corresponding to all CSI-RS resources in the second resource group is equal to the first coefficient corresponding to any CSI-RS resource in the first resource group, determining the first parameter to be equal to the first coefficient corresponding to any CSI-RS resource in the first resource group, and determining the second parameter as a sum of: (i) a sum of respective second coefficients corresponding to all CSI-RS resources in the first resource group, plus (ii) the second coefficient corresponding to any CSI-RS resource in the second resource group; or
determining the first parameter as a sum of: (i) a sum of respective first coefficients corresponding to all CSI-RS resources in the second resource group, plus (ii) the first coefficient corresponding to any CSI-RS resource in the first resource group, and determining the second parameter as a sum of: (i) a sum of respective second coefficients corresponding to all CSI-RS resources in the first resource group, plus (ii) the second coefficient corresponding to any CSI-RS resource in the second resource group.

15. The method of any one of claims 10to 14, further comprising:
receiving third configuration information sent by the network device, wherein the third configuration information indicates a set of CSI-RS resources, and the set of CSI-RS resources comprises the plurality of CSI-RS resources.

16. A method for determining information, performed by a network device, comprising:
sending first configuration information to a terminal, wherein the first configuration information indicates first coefficients and second coefficients corresponding to a plurality of channel state information-reference signal (CSI-RS) resources; and the first coefficients and the second coefficients are used by the terminal to determine a number of CSI-RS ports.

17. The method of claim 16, wherein
the first coefficients and the second coefficients are used by the terminal to determine a first parameter and a second parameter; and
the first parameter and the second parameter are used by the terminal to determine the number of CSI-RS ports as twice a product of the first parameter and the second parameter.

18. The method of claim 17, wherein
the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, and a first coefficient corresponding to a CSI-RS resource in a first resource group of the two resource groups is equal to a first coefficient corresponding to a CSI-RS resource in a second resource group of the two resource groups.

19. The method of claim 17, wherein
the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, and a second coefficient corresponding to a CSI-RS resource in a first resource group of the two resource groups is equal to a second coefficient corresponding to a CSI-RS resource in a second resource group of the two resource groups.

20. The method of claim 17, wherein
the plurality of CSI-RS resources are divided into two resource groups, different CSI-RS resources in a same resource group correspond to a same first coefficient and a same second coefficient, a products of a first coefficient and a second coefficient corresponding to a CSI-RS resource in one resource group is not equal to that in the other resource group, a first coefficient corresponding to a CSI-RS resource in a first resource group of the two resource groups is greater than a first coefficient corresponding to a CSI-RS resource in a second resource group of the two resource groups, and the first coefficient corresponding to the CSI-RS resource in the first resource group is equal to a sum of respective first coefficients corresponding to all CSI-RS resources in the second resource group.

21. The method of claim 17, wherein
the plurality of CSI-RS resources are divided into two resource groups, different CSI-RS resources in a same resource group correspond to a same first coefficient and a same second coefficient, a product of a first coefficient and a second coefficient corresponding to a CSI-RS resource in one resource group is not equal to that in the other resource group, a first coefficient corresponding to a CSI-RS resource in a first resource group of the two resource groups is less than a first coefficient corresponding to a CSI-RS resource in a second resource group of the two resource groups, and a sum of respective second coefficients corresponding to all CSI-RS resources in the first resource group is equal to a second coefficient corresponding to the CSI-RS resource in the second resource group.

22. The method of claim 17, wherein
the plurality of CSI-RS resources are divided into two resource groups, different CSI-RS resources in a same resource group correspond to a same first coefficient and a same second coefficient, a products of a first coefficient and a second coefficient corresponding to a CSI-RS resource in one resource group is not equal to that in the other resource group, a first coefficient corresponding to a CSI-RS resource in a first resource group among the plurality of resource groups is greater than a first coefficient corresponding to a CSI-RS resource in each of other resource groups, and the first coefficient corresponding to the CSI-RS resource in the first resource group is equal to a sum of respective first coefficients corresponding to all CSI-RS resources in any one of other resource groups.

23. The method of claim 17, wherein
the plurality of CSI-RS resources are divided into a plurality of resource groups, different CSI-RS resources in a same resource group correspond to a same first coefficient and a same second coefficient, a product of a first coefficient and a second coefficient corresponding to a CSI-RS resource in one resource groups is not equal to that in any other resource group, a second coefficient corresponding to a CSI-RS resource in a first resource group among the plurality of resource groups is greater than a second coefficient corresponding to a CSI-RS resource in each of other resource groups, and the second coefficient corresponding to the CSI-RS resource in the first resource group is equal to a sum of respective second coefficients corresponding to all CSI-RS resources in any one of other resource groups.

24. The method of any one of claims 16 to 23, further comprising:
sending second configuration information to the terminal, wherein the second configuration information indicates a plurality of sets of CSI-RS resources, the plurality of sets of CSI-RS resources comprise the plurality of CSI-RS resources, and CSI-RS resources belonging to a same set of CSI-RS resources belong to a same resource group.

25. The method of claim 17, wherein
in a case that the second coefficients corresponding to the plurality of CSI-RS resources are all 1, the first coefficient and the second coefficient are used by the terminal to determine that the first parameter is a sum of first coefficients corresponding to the plurality of CSI-RS resources, and the second parameter is the second coefficient.

26. The method of claim 17, wherein
in a case that the plurality of CSI-RS resources correspond to a same first coefficient and a same second coefficient, the first coefficient and the second coefficient are used by the terminal to determine a first exponent and a second exponent, wherein a product of the first exponent and the second exponent is equal to a total number of the plurality of CSI-RS resources; determine the first parameter to be a product of the first coefficient and the first exponent; and determine the second parameter to be a product of the second coefficient and the second exponent.

27. The method of claim 26, further comprising:
sending indication information to the terminal, wherein the indication information indicates the first exponent and the second exponent.

28. The method of claim 17, wherein
the plurality of CSI-RS resources are divided into two resource groups, different CSI-RS resources in a same resource group correspond to a same first coefficient and a same second coefficient, and a first coefficient corresponding to any CSI-RS resource in a first resource group of the two resource groups is not equal to a first coefficient corresponding to any CSI-RS resource in a second resource group of the two resource groups and/or a second coefficient corresponding to any CSI-RS resource in the first resource group is not equal to a second coefficient corresponding to any CSI-RS resource in the second resource group.

29. The method of claim 28, wherein
a sum of respective second coefficients corresponding to all CSI-RS resources in the first resource group is equal to the second coefficient corresponding to any CSI-RS resource in the second resource group; or
a sum of respective first coefficients corresponding to all CSI-RS resources in the second resource group is equal to the first coefficient corresponding to any CSI-RS resource in the first resource group.

30. The method of any one of claims 25 to 29, further comprising:
sending third configuration information to the terminal, wherein the third configuration information indicates a set of CSI-RS resources, and the set of CSI-RS resources comprises the plurality of CSI-RS resources.

31. A method for determining information, comprising:
sending, by a network device, first configuration information to a terminal, wherein the first configuration information indicates first coefficients and second coefficients corresponding to a plurality of channel state information-reference signal (CSI-RS) resources; and
receiving, by the terminal, the first configuration information sent by the network device; and
determining, by the terminal, a number of CSI-RS ports based on the first coefficients and the second coefficients.

32. A terminal, comprising:
a transceiver module, configured to receive first configuration information sent by a network device, wherein the first configuration information indicates first coefficients and second coefficients corresponding to a plurality of channel state information-reference signal (CSI-RS) resources; and
a processing module, configured to determine a number of CSI-RS ports based on the first coefficients and the second coefficients.

33. A network device, comprising:
a transceiver module, configured to send first configuration information to a terminal, wherein the first configuration information indicates first coefficients and second coefficients corresponding to a plurality of channel state information-reference signal (CSI-RS) resources; and the first coefficients and the second coefficients are used by the terminal to determine a number of CSI-RS ports.

34. A communication device, comprising:
one or more processors; and
a memory coupled to the processor, for storing instructions that, when executed by the one or more processors, cause the communication device to perform the method of any one of claims 1 to 15.

35. A communication device, comprising:
one or more processors; and
a memory coupled to the processor, for storing instructions that, when executed by the one or more processors, cause the communication device to perform the method of any one of claims 16 to 30.

36. A communication system, comprising: a terminal and a network device, wherein the terminal is configured to implement the method of any one of claims 1 to 15, and the network device is configured to implement the method of any one of claims 16 to 30.

37. A storage medium for storing instructions that, when executed on a communication device, cause the communication device to perform the method of any one of claims 1 to 15 or claims 16 to 30.
